(19) Europäisches Patentamt
European Patent Office
Office européen des brevets

(11) EP 2 085 420 A1

(12) EUROPEAN PATENT APPLICATION
published in accordance with Art. 153(4) EPC

(43) Date of publication:
**05.08.2009 Bulletin 2009/32**

(21) Application number: **07831853.2**

(22) Date of filing: **14.11.2007**

(51) Int Cl.:
***C08J 5/18*** (2006.01) ***A61J 1/10*** (2006.01)
***B32B 27/32*** (2006.01) ***B65D 65/40*** (2006.01)
***C08F 10/06*** (2006.01) ***C08L 23/10*** (2006.01)

(86) International application number:
**PCT/JP2007/072123**

(87) International publication number:
**WO 2008/059895 (22.05.2008 Gazette 2008/21)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.11.2006 JP 2006312233**
**22.11.2006 JP 2006316026**

(71) Applicant: **Mitsui Chemicals, Inc.**
**Tokyo 105-7117 (JP)**

(72) Inventors:
- **OKAMOTO, Masahiko**
**Sodegaura-shi**
**Chiba 299-0265 (JP)**
- **MORI, Ryoji**
**Sodegaura-shi**
**Chiba 299-0265 (JP)**
- **NAKAGAWA, Takashi**
**Sodegaura-shi**
**Chiba 299-0265 (JP)**
- **KAJIHARA, Takayuki**
**Ichihara-shi**
**Chiba 299-0108 (JP)**

(74) Representative: **HOFFMANN EITLE**
**Patent- und Rechtsanwälte**
**Arabellastraße 4**
**81925 München (DE)**

# (54) POLYPROPYLENE RESIN FILM AND USE THEREOF

(57) Provided is a polypropylene-based resin film of a single layer and a multilayer which is excellent in heat resistance and excellent as well in all of transparency, flexibility and impact resistance and which is suitable for food and medical containers.

The polypropylene-based resin film described above satisfies the following requisites (1) to (3) at the same time and has a thickness of 10 to 500 μm;
(1) a Young's modulus measured according to JIS K6781 is 10 to 500 MPa,
(2) a tensile impact strength measured at 0°C is 50 to 1000 $kJ/cm^2$ and
(3) a light transmittance is 85 to 99 %, and a reduction rate of the light transmittance before and after hot water treatment at 120°C for 30 minutes falls in a range of 0 to 15 %.



Printed by Jouve, 75001 PARIS (FR)

## Description

FIELD OF THE INVENTION

The present invention relates to a polypropylene-based resin film and use thereof. More specifically it relates to a polypropylene-based resin film which is excellent in heat resistance, transparency, flexibility and low-temperature impact resistance as compared with polypropylene-based resin films which have so far been publicly known and a multilayer film comprising the above film as a constitutional layer.

RELATED ART

Materials prepared by using plastics have advanced into many industrial fields which can not be met only by existing polypropylene-based resins. Among these industrial fields, films for food containers and medical containers are required to be excellent in heat resistance, flexibility, low temperature impact resistance and transparency in a balanced manner.

In recent years, retort foods start becoming rapidly widespread not only to usual households but also to the business fields, and therefore packaging materials (retort pouches) by which a large amount of foods can be packed in one package are required to be put into the market. In general, retort foods are used for applications in which they are stored at ambient temperature or in a cold or frozen state over a long period of time, so that films used for the above packaging materials are required to have such high heat sealing strength that a heat sealed part of a package is not broken by the contents thereof and low-temperature impact resistant strength. Further, retort foods are subjected to sterilization treatment in an autoclave at approximately 100 to 140°C after the foods are packed and tightly sealed therein, and therefore such heat resistance and heat sealing strength of the heat sealed part that can endure the above treatment are required to be maintained for controlling the quality of the foods. On the other hand, sterilization at high temperature in a short time leads not only to an improvement in the working efficiency but also a rise in a retention rate of a quality and a function of the content, and therefore a propylene-based resin used for a sealant layer of a retort pouch is required to be further improved in a heat resistant temperature (refer to a patent document 1).

Containers made of relatively flexible soft vinyl chloride resin and ethylene · vinyl acetate copolymer resin have so far been used as containers for medicines in many cases. These medical bags assume a closed system in which it is not necessary to use a vent needle in drip infusion, and therefore they have the advantage that they are not contaminated by ambient air. However, containers made of soft vinyl chloride resin contain additives such as a plasticizer, a stabilizer and the like, and therefore the above additives have had to be prevented from being eluted. Further, medical bags comprising ethylene · vinyl acetate copolymer resins are inferior in heat resistance, and therefore the resins have had to be cross-linked (refer to patent documents 2 to 3).

Patent document 1: Japanese Patent Application Laid-Open No. 216640/1997
Patent document 2: Japanese Patent Application Laid-Open No. 053131/2005
Patent document 3: Japanese Patent Application Laid-Open No. 244044/2004

DISCLOSURE OF THE INVENTION

PROBLEM TO BE SOLVED BY THE INVENTION

The present invention has been made in light of the conventional techniques described above, and an object of the present invention is to provide a polypropylene-based resin film of a single layer and a multilayer which is excellent in all of heat resistance, transparency, flexibility and impact resistance.

MEANS TO SOLVE THE PROBLEM

That is, the polypropylene-based resin film of the present invention is characterized by satisfying the following requisites (1) to (3) at the same time and having a thickness of 10 to 500 $\mu$m;

(1) a Young's modulus measured according to JIS K6781 is 10 to 500 MPa,
(2) a tensile impact strength measured at 0°C is 50 to 1000 kJ/$cm^2$ and
(3) a light transmittance is 85 to 99 %, and a reduction rate of the light transmittance before and after hot water treatment at 120°C for 30 minutes falls in a range of 0 to 15 %.

The polypropylene-based resin film described above further satisfies preferably the following requisite (4):

(4) Tm measured by DSC is 145°C or higher.

The polypropylene-based resin film described above further satisfies preferably the following requisite (5):

(5) the polypropylene-based resin film described above comprises a propylene-based polymer composition comprising:

(A) 85 to 25 parts by weight of a syndiotactic polypropylene polymer satisfying the following requisite (a) and
(B) 15 to 75 parts by weight (provided that the total of (A) and (B) is 100 parts by weight) of a propylene · α-olefin copolymer satisfying the following requisite (b);
(a): a syndiotactic pentad ratio (rrrr ratio) measured by $^{13}C$-NMR is 85 % or more; a melting point (Tm) measured by a differential scanning calorimeter (DSC) is 145°C or higher; and a propylene unit is contained in an amount of exceeding 90 mole % (provided that the whole amount of constitutional units contained in the above polymer (A) is 100 mole %);
(b): a propylene unit is contained in an amount of 55 to 90 mole % (provided that the whole amount of constitutional units contained in the above polymer (B) is 100 mole %); at least one α-olefin unit selected from α-olefins having 2 to 20 carbon atoms (excluding propylene) is contained in an amount of 10 to 45 mole % (provided that the total of the propylene unit and the α-olefin unit having 2 to 20 carbon atoms (excluding propylene) is 100 mole %); MFR measured at 230°C and a load of 2.16 kg according to JIS K-6721 falls in a range of 0.01 to 100 g/10 minutes; and at least one of the following requisites (b-1) and (b-2) is satisfied:

(b-1): a syndiotactic triad ratio (rr ratio) measured by a $^{13}C$-NMR method is 60 % or more; and
(b-2): an intrinsic viscosity [ η ] (dL/g) measured at 135°C in decalin and MFR (g/10 minutes, 230°C and a load of 2.16 kg) described above satisfy the following relational equation:

$$1.50 \times MFR^{(-0.20)} \leqq [\eta] \leqq 2.65 \times MFR^{(-0.20)}$$

The polypropylene-based resin film described above further comprises preferably an ethylene · α-olefin copolymer satisfying the following requisite (c) in an amount of 1 to 100 parts by weight based on 100 parts by weight of the total of (A) and (B);

(c): 50 to 99 mole % of an ethylene unit and 1 to 50 mole % (provided that the whole amount of constitutional units contained in the above polymer (C) is 100 mole %) of an α-olefin unit having 3 to 20 carbon atoms are contained.

The polypropylene-based resin film described above further satisfies preferably the following requisite (6):

(6) the polypropylene-based resin film described above comprises a polypropylene-based resin which has a propylene unit concentration ($S_P$) of 40 to 95 mole % and an ethylene unit concentration ($S_E$) of 60 to 5 mole % and in which a concentration ($S_\alpha$) of an α-olefin unit having 4 to 10 carbon atoms is 0 to 15 mole % (provided that $S_P + S_E + S_\alpha$ = 100 mole % and $S_P/S_E$>1).

The polypropylene-based resin film described above further satisfies preferably the following requisite (7):

(7) a component ($D_{sol}$) soluble in decane at room temperature has an intrinsic viscosity of 1.5 to 4.0 (dl/g).

The polypropylene-based resin film described above is formed preferably by an inflation or extrusion method.
The multilayer film of the present invention is prepared by using the polypropylene-based resin film described above as a base material layer and laminating an outer layer comprising a polyolefin-based resin on at least one surface of the base material layer.
The container of the present invention for foods comprises the polypropylene-based resin film or the multilayer film each described above.
The medical container of the present invention comprises the polypropylene-based resin film or the multilayer film each described above.

ADVANTAGES OF THE INVENTION

The polypropylene-based resin film of the present invention is excellent in heat resistance, transparency, flexibility and low-temperature impact resistance.

Use of the polypropylene-based resin film of the present invention provides a polypropylene-based resin film of a single layer and a multilayer which is not reduced in transparency even by sterilization treatment at high temperature and which is excellent in low-temperature impact resistance and flexibility.

Brief Explanation of the Drawings

Fig. 1 is a diagram obtained by plotting a relation of a specific isothermal crystallization temperature ($T_{iso}$) with a semi-crystallization time ($t_{1/2}$) at the above temperature in the syndiotactic propylene polymers described in the examples and the comparative examples of the present invention. A part surrounded by heavy lines shows a region of an inequality (Eq-1) which is the preferred property of the syndiotactic propylene polymer (A) of the present invention. Further, for the sake of reference, a polymer (AA-2) falling in the range of (A) is shown, though not used in the examples, by plotting.

Fig. 2 is a diagram obtained by plotting a relation of MFR with [ $\eta$ ] in a polymer corresponding to the component (A) or the component (B) which is the preferred embodiment of the present invention (provided that AA-3 and AA-6 do not correspond to the component (A)) and an isotactic polypropylene-based polymer. A part surrounded by heavy lines shows a region of (b-2) which is one of the preferred properties of the component (B) of the present invention, and a part surrounded by broken lines shows the preferred range of (b-2).

BEST MODE FOR CARRYING OUT THE INVENTION

Polypropylene-based resin film:

The polypropylene-based resin film of the present invention (usually means a polypropylene-based resin single layer film; the term ⌊single layer⌋ shall not exclude lamination of layers other than the layer of the above polypropylene film) is a polypropylene-based resin film satisfying the requisites (1) to (3) described below in details at the same time, preferably at least one requisite selected from the requisites (4) to (7) in addition to the requisites (1) to (3) and more preferably all of the requisites (4) to (7) in addition to the requisites (1) to (3).

The polypropylene-based resin film of the present invention has a thickness of 10 to 500 μm, preferably 100 to 400 μm and more preferably 100 to 300 μm. The thickness falling in the range described above makes it possible to stably form the polypropylene-based resin film described above which satisfies the requisites (1) to (3) at the same time.

<Requisite (1)>

The polypropylene-based resin film of the present invention has a Young's modulus of 10 to 500 MPa, preferably 50 to 400 MPa which is measured according to JIS K6781. If the Young's modulus deviates from the above range, the flexibility can not be maintained in a certain case before and after retort treatment (sterilization treatment with hot water under pressure).

<Requisite (2)>

The polypropylene-based resin film of the present invention has a tensile impact strength of 50 to 1000 $kJ/cm^2$, preferably 100 to 1000 $kJ/cm^2$ which is measured at 0°C. When the tensile impact strength is less than 50 $kJ/cm^2$, a liquid of the content leaks in a certain case when a container made of the polypropylene-based resin film is charged with a food and a medicine and falls after stored at low temperature.

<Requisite (3)>

The polypropylene-based resin film of the present invention has a light transmittance of 85 to 99 %, preferably 85 to 95 %, and a reduction rate of the light transmittance before and after hot water treatment at 120°C for 30 minutes is less than 15 %, preferably less than 10 %. When the light transmittance is less than 80 %, it is difficult in a certain case depending on the contents to distinguish visually the contents from the outside of the container. On the other hand, if the light transmittance exceeds 95 %, it is practically difficult to produce the polypropylene-based resin film of the

present invention satisfying all the requisites other than the present requisite at the same time. When a reduction rate of the light transmittance before and after hot water treatment is 15 % or more, the transparency is notably reduced by sterilization treatment at 121°C. The「 light transmittance」 can be measured by a method described in an example described later. The「reduction rate of the light transmittance 」is a value calculation from the following equation.

reduction rate of the light transmittance = ((light transmittance before hot water treatment) -(light transmittance after hot water treatment))/(light transmittance before hot water treatment) × 100

<Requisite (4)>

The polypropylene-based resin film of the present invention has Tm of preferably 145°C or higher, more preferably 145 to 170°C, further preferably 150 to 170°C and particularly preferably 154°C or higher and 170°C or lower which is measured by means of a differential scanning calorimeter (DSC). If Tm falls in the range described above, the resin film is excellent in heat resistance.

<Requisite (5)>

A polypropylene-based resin constituting the polypropylene-based resin film of the present invention is preferably a polypropylene-based resin composition comprising (A) a syndiotactic polypropylene polymer, (B) a propylene· α-olefin copolymer and, if necessary, (C) an ethylene· α-olefin copolymer. The respective components shall be explained below in details.

<Syndiotactic propylene polymer (A)>

The syndiotactic propylene polymer (A) used in the present invention may be homopolypropylene, a random copolymer of propylene and α-olefin (excluding propylene) having 2 to 20 carbon atoms or a propylene block copolymer as long as they have the following characteristics, and it is preferably the homopolypropylene or the random copolymer of propylene and α-olefin (excluding propylene) having 2 to 20 carbon atoms. A copolymer of propylene with ethylene or α-olefin having 4 to 10 carbon atoms and a copolymer of propylene, ethylene and α-olefin having 4 to 10 carbon atoms are particularly preferred, and the homopolypropylene is particularly preferred form the viewpoint of heat resistance.

In this connection, the α-olefin having 2 to 20 carbon atoms other than propylene includes ethylene, 1-butene, 1-pentene, 1,hexane, 3-methyl-1-butene, 4-methyl-1-pentene, 1-octene, 1-decene, 1-dodecene, 1-tetradecene, 1-hexadecene, 1-octadecene, 1-eicocene and the like. Usually, the propylene unit is contained in an amount of exceeding 90 mole %, preferably 91 mole % or more based on total 100 mole % of the α-olefin (including propylene) units having 2 to 20 carbon atoms. In other words, the syndiotactic polypropylene polymer (AA) of the present invention contains usually the propylene unit in an amount of exceeding 90 mole % and 100 mole % or less and the α-olefin (excluding propylene) units having 2 to 20 carbon atoms in an amount of 0 mole % or more and less than 10 mole % (provided that the total of the propylene unit and the α-olefin (excluding propylene) units having 2 to 20 carbon atoms is 100 mole %), and it contains particularly preferably the propylene unit in an amount of 91 mole % or more and 100 mole % or less and the α-olefin (excluding propylene) unit having 2 to 20 carbon atoms in an amount of 0 mole % or more and 9 mole % or less.

When the syndiotactic propylene polymer (A) is a propylene·α-olefin random copolymer, it contains an α-olefin (excluding propylene) unit having 2 to 20 carbon atoms in an amount of 0.3 to 7 mole %, preferably 0.3 to 6 mole % and further preferably 0.3 to 5 mole %.

The syndiotactic propylene polymer (A) used in the present invention has a syndiotactic pentad ratio (rrrr ratio, pentad syndiotacticity) of 85 % or more, preferably 90 % or more, more preferably 93 % or more and further preferably 94 % or more which is measured by a NMR method. The syndiotactic polypropylene polymer (A) having a rrrr ratio falling in the above range is excellent in a molding property, heat resistance and transparency and has good characteristics of crystalline polypropylene, and therefore it is preferred. The rrrr ratio does not have a specific upper limit, and it is 100 % or less, usually 99 % or less.

The above syndiotactic pentad ratio (rrrr ratio) is measured in the following manner.
The rrrr ratio is determined from the absorption intensities of Prrrr (an absorption intensity originating in methyl of the third unit in a part in which five propylene units are continuously subjected to syndiotactic bonding) and Pw (an absorption intensity originating in all methyls in the propylene unit) in a $^{13}$C-NMR spectrum according to the following equation (1):

$$\text{rrrr ratio (\%)} = 100 \times \text{Prrrr}/\text{Pw} \qquad (1)$$

NMR measurement is carried out, for example, in the following manner. That is, 0.35 g of the sample is dissolved in 2.0

ml of hexachlorobutadiene by heating. This solution is filtrated through a glass filter (G2), and then 0.5 ml of deuterated benzene is added thereto. An NMR tube having a minor diameter of 10 mm is charged with the above solution and subjected to $^{13}C$-NMR measurement at 120°C by means of a GX-500 type NMR measuring apparatus manufactured by JEOL Ltd. The integration frequency is set to 10,000 or more.

The syndiotactic propylene polymer (A) has an intrinsic viscosity [ η ] of 0.1 to 10 dL/g, preferably 0.5 to 10 dL/g which is measured at 135°C in decalin. It falls in a range of more preferably 0.50 to 8.00 dL/g, further preferably 0.95 to 8.00 dL/g, particularly preferably 1.00 to 8.00 dL/g and further more preferably 1.40 to 8.00 dL/g. Above all, the intrinsic viscosity falls in a range of preferably 1.40 to 5.00 dL/g. The syndiotactic polypropylene polymer (A) having the above intrinsic viscosity [ η ] shows a good fluidity and is liable to be blended with other components, and molded articles having an excellent mechanical strength tend to be obtained from the composition obtained therefrom.

Further, the syndiotactic propylene polymer (A) has a melting point (Tm) of 145°C or higher, preferably 147°C or higher, more preferably 150°C or higher, further preferably 155°C or higher and particularly preferably 156°C or higher which is measured by means of a differential scanning calorimeter (DSC). Tm does not have a specific upper limit, and it is usually, for example, 170°C or lower.

Further, the syndiotactic propylene polymer (A) has a heat of fusion (ΔH) of 40 mJ/mg or more, preferably 45 mJ/mg or more, more preferably 50 mJ/mg or more, further preferably 52 mJ/mg or more and particularly preferably 55 mJ/mg or more.

The heat of fusion is measured by means of a differential scanning calorimeter, for example, in the following manner. An aluminum pan for exclusive use is charged with about 5.00 g of the sample and heated from 30°C up to 200°C at 320°C/minute by means of DSCPyris1 or DSC7 manufactured by Perkin Elmer Inc., and it is held at 200°C for 5 minutes. Then, it is cooled from 200°C down to 30°C at 10°C/minute, and it is held at 30°C for further 5 minutes. Next, the melting point (Tm) and the heat of fusion (ΔH) are determined from an endothermic curve in heating at 10°C/minute. When plural peaks are detected in DSC measurement, a peak detected at a highest temperature side is defined as the melting point (Tm).

The syndiotactic propylene polymer (A) having a melting point (Tm) falling in the above range is excellent in a molding property, heat resistance and mechanical characteristics and has good characteristics of crystalline polypropylene, and therefore it is preferred. Using of a catalyst described later and setting of polymerization conditions described later make it possible to produce the syndiotactic propylene polymer (A) having a melting point (Tm) falling in the above range.

The syndiotactic propylene polymer (A) satisfies the following equation (Eq-1) in a range of $110 \leqq T_{iso} \leqq 150$ (°C), wherein an isothermal crystallization temperature measured by means of a differential scanning calorimeter (DSC) is $T_{iso}$, and a semi-crystallization time at the isothermal crystallization temperature $T_{iso}$ is $t_{1/2}$;

$$1.67 \times 10^{-4} \exp (0.10 \times T_{iso}) \leqq t_{1/2} \leqq 5.56 \times 10^{-4} \exp (0.12 \times T_{iso}) \qquad \text{(Eq-1)}$$

satisfies preferably the following equation (Eq-2)

$$1.67 \times 10^{-4} \exp (0.10 \times T_{iso}) \leqq t_{1/2} \leqq 3.71 \times 10^{-4} \exp (0.12 \times T_{iso}) \qquad \text{(Eq-2)}$$

and satisfies more preferably the following equation (Eq-3)

$$1.67 \times 10^{-4} \exp (0.10 \times T_{iso}) \leqq t_{1/2} \leqq 2.23 \times 10^{-4} \exp (0.12 \times T_{iso}) \qquad \text{(Eq-3)}$$

The semi-crystallization time ($t_{1/2}$) determined by measuring the isothermal crystallization temperature is time spent for reaching 50 % of the calorie, wherein an area between a DSC calorie curve and a base line in an isothermal crystallization step is a whole calorie (refer to New High Polymer Experimental Course 8, Physical Properties of High Polymer (Kyoritsu Shuppan CO., Ltd.)).
The semi-crystallization time ($t_{1/2}$) is measured in the following manner. An aluminum pan for exclusive use is charged with about 5 mg of the sample and heated from 30°C up to 200°C at 320°C/minute by means of DSCPyris1 or DSC7 manufactured by Perkin Elmer Inc., and it is held at 200°C for 5 minutes. Then, it is cooled from the above temperature (200°C) down to the respective isothermal crystallization temperatures at 320°C/minute, and it is held at the isothermal crystallization temperatures to obtain a DSC curve. The semi-crystallization time ($t_{1/2}$) is determined from the DSC curve thus obtained. In this respect, the semi-crystallization time ($t_{1/2}$) is determined by assuming that time in which the isothermal crystallization step starts (time spent until the temperature reaches from 200°C to the isothermal crystallization temperature) is set to t = 0. In the syndiotactic propylene polymer (A) used in the present invention, $t_{1/2}$ can be determined in the manner described above. When crystallization does not take place at a certain isothermal crystallization temperature, for example, 110°C, measurement is carried out in several points at isothermal crystallization temperatures of 110°C or lower for the sake of convenience, and the semi-crystallization time ($t_{1/2}$) is determined from an extrapolated value thereof.

The syndiotactic propylene polymer (A) satisfying the equation (Eq-1) described above is excellent very much in a molding property as compared with existing polymers. The term "excellent in a molding property" means that time spent from a molten state to solidification is short when carrying out molding such as injection, inflation, blowing, extrusion, pressing and the like. The above syndiotactic propylene polymer (A) is excellent in a mold cycling property, a shape stability, a long term productivity and the like.

The syndiotactic propylene polymer (A) satisfying the equation (Eq-1) described above can be produced by using a catalyst described later and setting polymerization conditions described later.

The preferred embodiment of the syndiotactic propylene polymer (A) of the present invention includes an embodiment satisfying the following requisite (a n-decane soluble part amount) at the same time in addition to the preferred embodiment described above (satisfying $\Delta H \geqq 40$ mJ/ mg and satisfying the equation (Eq-1) described above).

A n-decane soluble part amount of the syndiotactic propylene polymer (A) is 1 (wt %) or less, preferably 0.8 (wt %) or less, more preferably 0.6 (wt %) or less. This n-decane soluble part amount is an index tightly close to a blocking characteristic of the syndiotactic propylene polymer (A) or a molding obtained therefrom, and the low n-decane soluble part amount means that the low-crystalline component amount is small. That is, the syndiotactic propylene polymer (A) satisfying as well the present requisite (a n-decane soluble part amount) is provided with a very good blocking resistant characteristic.

Accordingly, one of the most preferred embodiments of the component (A) is a syndiotactic propylene polymer in which a constitutional unit derived from propylene is contained in an amount of exceeding 90 mole %; a syndiotactic pentad ratio (rrrr ratio) measured by $^{13}$C-NMR is 85 % or more; a melting point (Tm) determined by DSC is 145°C or higher; a heat of fusion ($\Delta H$) is 40 mJ/mg or more; (Eq-1) described above is satisfied; and a n-decane soluble part amount is 1 wt % or less.

In producing the syndiotactic propylene polymer (A) used in the present invention, suitably used is a catalyst (cat-1) for polymerization comprising at least one compound selected from:

(I) a cross-linked metallocene compound represented by Formula [1] described below,
(II)

(II-1) an organic aluminumoxy compound,
(II-2) a compound reacted with the cross-linked metallocene compound (A) described above to form an ion pair and
(II-3) an organic aluminum compound

or a catalyst (cat-2) for polymerization prepared by carrying the above catalyst (cat-1) on a particulate carrier. However, the catalyst used for producing the syndiotactic propylene polymer (A) shall by no means be restricted to the above catalysts as long as the polymer formed satisfies the requisites of the syndiotactic polypropylene polymer (A).

[Chem. 1]

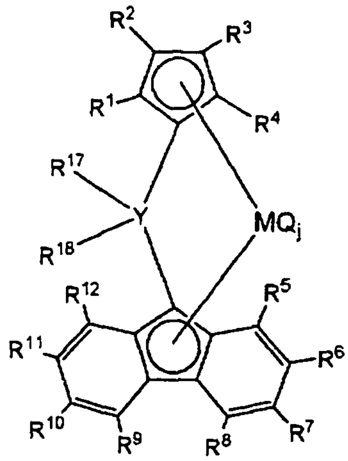

....[1]

In Formula [1] described above, $R^1$, $R^2$, $R^3$ and $R^4$ are selected from a hydrogen atom, a hydrocarbon group and a silicon-containing group, and $R^2$ and $R^3$ may be combined with each other to form a ring; $R^5$, $R^6$, $R^8$, $R^9$, $R^{11}$ and $R^{12}$ are selected from a hydrogen atom, a hydrocarbon group and a silicon-containing group; two groups of $R^7$ and $R^{10}$ are not a hydrogen atom and are selected from a hydrocarbon group and a silicon-containing group, and they may be the same as or different from each other; in combination of one or more adjacent groups selected from $R^5$ and $R^6$, $R^7$ and $R^8$, $R^8$ and $R^9$, $R^9$ and $R^{10}$ and $R^{11}$ and $R^{12}$, the above adjacent groups may be combined with each other to form a ring; $R^{17}$ and $R^{1B}$ are a hydrogen atom, a hydrocarbon group having 1 to 20 carbon atoms or a silicon atom-containing group and may be the same as or different from each other, and the substituents may be combined with each other to form a ring; M is Ti, Zr or Hf; Y is carbon; Q may be selected from halogen, a hydrocarbon group, an anionic ligand and a neutral ligand which can be coordinated with a lone electron pair in the same combination or a different combination; and j is an integer of 1 to 4.

(I) Cross-linked metallocene compound:

The specific examples of the cross-linked metallocene compound (I) represented by Formula [1] described above (referred to as the component (I) in the present specification) are shown below.

Capable of being shown as the examples thereof are cyclopropylidene(cyclopentadienyl)(3,6-di-tert-fluorenyl) zirconium dichloride, cyclobutylidene(cyclopentadienyl)(3,6-di-tert-fluorenyl)zirconium dichloride, cyclopentylidene(cyclopentadienyl)(3,6-di-tert-fluorenyl)-zirconium dichloride, cyclohexylidene(cyclopentadienyl)(3,6-di-tert-fluorenyl)zirconium dichloride, cycloheptylidene(cyclopentadienyl)(3,6-di-tert-fluorenyl)zirconium dichloride, dibenzylmethylene(cyclopentadienyl)(3,6-di-tert-butylfluorenyl)zirconium dichloride, dibenzylmethylene(cyclopentadienyl)-(octamethyloctahydrodibenzofluorenyl)zirconium dichloride, di-n-butylmethylene(cyclopentadienyl)(2,7-dimethyl-3,6-di-tert-butylfluorenyl)zirconium dichloride, di-n-butylmethylene(cyclopentadienyl)(2,7-di(2,4,6-trimethylphenyl)-3,6-di-tert-butylfluorenyl)zirconium dichloride, di-n-butylmethylene(cyclopentadienyl)(2,7-diphenyl-3,6-di-tert-butylfluorenyl)zirconium dichloride, din-butylmethylene(cyclopentadienyl)(2,7-di(3,5-dimethylphenyl)-3,6-di-tert-butylfluorenyl)zirconium dichloride, di-n-butylmethylene(cyclopentadienyl)(2,3,6,7-tetra-tert-butylfluorenyl)zirconium dichloride, di-n-butylmethylene(cyclopentadienyl)(2,7-di(4-methylphenyl)-3,6-di-tert-butylfluorenyl)zirconium dichloride, di-n-butylmethylene(cyclopentadienyl)(2,7-dinaphthyl-3,6-di-tert-butylfluorenyl)zirconium dichloride, di-n-butylmethylene(cyclopentadienyl)(2,7-di(4-tert-butylphenyl)-3,6-di-tert-butylfluorenyl)zirconium dichloride, diisobutylmethylene(cyclopentadienyl)(2,7-dimethyl-3,6-di-tert-butylfluorenyl)zirconium dichloride, diisobutylmethylene(cyclopentadienyl(2,7-di(2,4,6-trimethylphenyl)-3,6-di-tert-butylfluorenyl)zirconium dichloride, diisobutylmethylene(cyclopentadienyl)(2,7-diphenyl-3,6-di-tert-butylfluorenyl) zirconium dichloride, diisobutylmethylene(cyclopentadienyl)(2,7-di(3,5-dimethylphenyl)-3,6-di-tert-butylfluorenyl)zirconium dichloride, diisobutylmethylene(cyclopentadienyl)(2,3,6,7-tetra-tert-butylfluorenyl)zirconium dichloride, diisobutylmethylene(cyclopentadienyl)(2,7-di(4-methylphenyl)-3,6-di-tert-butylfluorenyl)zirconium dichloride, diisobutylmethylene (cyclopentadienyl)(2,7-dinaphthyl-3,6-di-tert-butylfluorenyl)zirconium dichloride, diisobutylmethylene(cyclopentadienyl) (2,7-di(4-tert-butylphenyl)-3,6-di-tert-butylfluorenyl)zirconium dichloride, dibenzylmethylene(cyclopentadienyl)(2,7-dimethyl-3,6-di-tert-butylfluorenyl)zirconium dichloride (in another term, referred to as 1,3-diphenylisopropylidene(cyclopentadienyl)(2,7-dimethyl-3,6-di-tert-butylfluorenyl)zirconium dichloride; hereinafter another term shall be omitted), dibenzylmethylene(cyclopentadienyl)(2,7-di(2,4,6-trimethylphenyl)-3,6-di-tert-butylfluorenyl)zirconium dichloride,

dibenzylmethylene(cyclopentadienyl)(2,7-diphenyl-3,6-di-tert-butylfluorenyl)zirconium dichloride, dibenzylmethylene (cyclopentadienyl)(2,7-di(3,5-dimethylphenyl)-3,6-di-tert-butylfluorenyl)zirconium dichloride, dibenzylmethylene(cyclopentadienyl)(2,3,6,7-tetra-tert-butylfluorenyl)zirconium dichloride, dibenzylmethylene(cyclopentadienyl)(2,7-di(4-methylphenyl)-3,6-di-tert-butylfluorenyl)zirconium dichloride, dibenzylmethylene(cyclopentadienyl)(2,7-dinaphthyl-3,6-di-tert-butylfluorenyl)zirconium dichloride, dibenzylmethylene(cyclopentadienyl)(2,7-di(4-tert-butylphenyl)-3,6-di-tert-butylfluorenyl)zirconium dichloride, diphenethylmethylene(cyclopentadienyl)(2,7-dimethyl-3,6-di-tert-butylfluorenyl)zirconium dichloride, diphenethylmethylene(cyclopentadienyl)(2,7-diphenyl-3,6-di-tert-butylfluorenyl)zirconium dichloride, di(benzhydryl)methylene(cyclopentadienyl)(2,7-dimethyl-3,6-di-tert-butylfluorenyl)zirconium dichloride, di(benzhydryl) methylene(cyclopentadienyl)(2,7-diphenyl-3,6-di-tert-butylfluorenyl)zirconium dichloride, di(cumyl)methylene(cyclopentadienyl)(2,7-dimethyl-3,6-di-tert-butylfluorenyl)zirconium dichloride, di(cumyl)methylene(cyclopentadienyl)(2,7-diphenyl-3,6-di-tert-butylfluorenyl)zirconium dichloride, di(1-phenyl-ethyl)methylene(cyclopentadienyl)(2,7-dimethyl-3,6-di-tert-butylfluorenyl)zirconium dichloride, di(1-phenylethyl)methylene(cyclopentadienyl)(2,7-diphenyl-3,6-di-tert-butylfluorenyl)zirconium dichloride, di(cyclohexylmethyl)methylene(cyclopentadienyl)(2,7-dimethyl-3,6-di-tert-butylfluorenyl) zirconium dichloride, di(cyclohexylmethyl)methylene(cyclopentadienyl)(2,7-diphenyl-3,6-di-tert-butylfluorenyl)zirconium dichloride, di(cyclopentylmethyl)methylene(cyclopentadienyl)(2,7-dimethyl-3,6-di-tert-butylfluorenyl)zirconium dichloride, di(cyclopentylmethyl)methylene(cyclopentadienyl)(2,7-diphenyl-3,6-di-tert-butylfluorenyl)zirconium dichloride, di (naphthylmethyl)methylene(cyclopentadienyl)(2,7-dimethyl-3,6-di-tert-butylfluorenyl)zirconium dichloride, di(naphthylmethyl)methylene(cyclopentadienyl)(2,7-diphenyl-3,6-di-tert-butylfluorenyl)zirconium dichloride, di(biphenylmethyl) methylene(cyclopentadienyl)(2,7-dimethyl-3,6-di-tert-butylfluorenyl)zirconium dichloride, di(biphenylmethyl)methylene (cyclopentadienyl)(2,7-diphenyl-3,6-di-tert-butylfluorenyl)zirconium dichloride, (benzyl)(n-butyl)methylene(cyclopentadienyl)(2,7-dimethyl-3,6-di-tert-butylfluorenyl)zirconium dichloride, (benzyl)(n-butyl)methylene(cyclopentadienyl)(2,7-diphenyl-3,6-di-tert-butylfluorenyl)zirconium dichloride, (benzyl)(cumyl)methylene(cyclopentadienyl)(2,7-dimethyl-3,6-di-tert-butylfluorenyl)zirconium dichloride, (benzyl)(cumyl)methylene(cyclopentadienyl)(2,7-diphenyl-3,6-di-tert-butylfluorenyl)zirconium dichloride, cyclopropylidene(cyclopentadienyl)(2,7-dimethyl-3,6-di-tert-butylfluorenyl)zirconium dichloride, cyclopropylidene(cyclopentadienyl)(2,7-diphenyl-3,6-di-tert-butylfluorenyl)zirconium dichloride, cyclobutylidene (cyclopentadienyl)(2,7-dimethyl-3,6-di-tert-butylfluorenyl)zirconium dichloride, cyclobutylidene(cyclopentadienyl)(2,7-diphenyl-3,6-di-tert-butylfluorenyl)zirconium dichloride, cyclopentylidene(cyclopentadienyl)(2,7-dimethyl-3,6-di-tert-butylfluorenyl)zirconium dichloride, cyclopentylidene(cyclopentadienyl)(2,7-diphenyl-3,6-di-tert-butylfluorenyl)zirconium dichloride, cyclohexylidene(cyclopentadienyl)(2,7-dimethyl-3,6-di-tert-butylfluorenyl)zirconium dichloride, cyclohexylidene(cyclopentadienyl)(2,7-diphenyl-3,6-di-tert-butylfluorenyl)zirconium dichloride, cycloheptylidene(cyclopentadienyl) (2,7-dimethyl-3,6-di-tert-butylfluorenyl)zirconium dichloride, cycloheptylidene(cyclopentadienyl)(2,7-diphenyl-3,6-di-tert-butylfluorenyl)zirconium dichloride, dibenzylmethylene(cyclopentadienyl)(2,7-dimethyl-3,6-dimethyl-butylfluorenyl) zirconium dichloride, di-n-butylmethylene(cyclopentadienyl)(2,7-dimethyl-3,6-dimethyl-butylfluorenyl)zirconium dichloride, dibenzylmethylene(cyclopentadienyl)(2,7-dimethyl-3,6-dicumyl-butylfluorenyl)zirconium dichloride, di-n-butylmethylene(cyclopentadienyl)(2,7-dimethyl-3,6-dicumyl-butylfluorenyl)zirconium dichloride, dibenzylmethylene(cyclopentadienyl) (2,7-dimethyl-3,6-di(trimethylsilyl)-butylfluorenyl)zirconium dichloride, di-n-butylmethylene(cyclopentadienyl)(2,7-dimethyl-3,6-di(trimethylsilyl)-butylfluorenyl)zirconium dichloride, dibenzylmethylene(cyclopentadienyl)(2,7-dimethyl-3,6-diphenyl-butylfluorenyl)zirconium dichloride, di-n-butylmethylene(cyclopentadienyl) (2,7-dimethyl-3,6-diphenyl-butylfluorenyl)zirconium dichloride, dibenzylmethylene(cyclopentadienyl) (2,7-dimethyl-3,6-dibenzyl-butylfluorenyl)zirconium dichloride, di-n-butylmethylene(cyclopentadienyl) (2,7-dimethyl-3,6-dibenzyl-butylfluorenyl)zirconium dichloride, dibenzylmethylene(cyclopentadienyl) (2,7-dimethyl-3,6-dimethyl-butylfluorenyl)zirconium dichloride, di-n-butylmethylene(cyclopentadienyl) (2,7-dimethyl-3,6-dimethyl-butylfluorenyl)zirconium dichloride, diphenylmethylene(cyclopentadienyl)(2,7-dimethyl-3,6-di-tert-butylfluorenyl)zirconium dichloride, diphenylmethylene(cyclopentadienyl)(2,7-diphenyl-3,6-di-tert-butylfluorenyl)zirconium dichloride, di(p-tolyl)methylene(cyclopentadienyl) (2,7-dimethyl-3,6-di-tert-butylfluorenyl)zirconium dichloride, di(p-tolyl)methylene(cyclopentadienyl)(2,7-diphenyl-3,6-di-tert-butylfluorenyl)zirconium dichloride, di(p-chlorophenyl)methylene(cyclopentadienyl)(2,7-dimethyl-3,6-di-tert-butylfluorenyl)zirconium dichloride, di(p-chlorophenyl)methylene(cyclopentadienyl)(2,7-diphenyl-3,6-ditert-butylfluorenyl)zirconium dichloride, di(m-chlorophenyl)methylene(cyclopentadienyl)(2,7-dimethyl-3,6-di-tert-butylfluorenyl)zirconium dichloride, di(m-chlorophenyl) methylene(cyclopentadienyl)(2,7-diphenyl-3,6-di-tert-butylfluorenyl)zirconium dichloride, di(p-bromophenyl)methylene (cyclopentadienyl)(2,7-dimethyl-3,6-di-tert-butylfluorenyl)zirconium dichloride, di(p-bromophenyl)methylene(cyclopentadienyl)(2,7-diphenyl-3,6-di-tert-butylfluorenyl)zirconium dichloride, di(m-trifluoromethylphenyl)methylene(cyclopentadienyl)(2,7-dimethyl-3,6-di-tert-butylfluorenyl)zirconium dichloride, di(m-trifluoromethylphenyl)methylene(cyclopentadienyl)(2,7-diphenyl-3,6-di-tert-butylfluorenyl)zirconium dichloride, di(p-trifluoromethyl-phenyl)methylene(cyclopentadienyl)(2,7-dimethyl-3,6-di-tert-butylfluorenyl)zirconium dichloride, di(p-trifluoromethylphenyl)methylene(cyclopentadienyl)(2,7-diphenyl-3,6-di-tert-butylfluorenyl)zirconium dichloride, di(p-tert-butylphenyl)methylene(cyclopentadienyl) (2,7-dimethyl-3,6-di-tert-butylfluorenyl)zirconium dichloride, di(p-tert-butylphenyl)methylene(cyclopentadienyl)(2,7-diphenyl-3,6-di-tert-butylfluorenyl)zirconium dichloride, di(p-n-butylphenyl)methylene(cyclopentadienyl)(2,7-dimethyl-3,6-di-tert-butylfluorenyl)zirconium dichloride, di(p-n-butylphenyl)methylene(cyclopentadienyl)(2,7-diphenyl-3,6-di-tert-butylfluorenyl)zirconium dichloride, di(p-biphenyl)methylene(cyclopentadienyl)(2,7-dimethyl-3,6-di-tert-butylfluorenyl) zirconium dichloride, di(p-biphenyl)methylene(cyclopentadienyl)(2,7-diphenyl-3,6-di-tert-butylfluorenyl)zirconium dichloride, di(1-naphthyl)methylene(cyclopentadienyl)(2,7-dimethyl-3,6-di-tert-butylfluorenyl)zirconium dichloride, di(1-naphthyl)methylene(cyclopentadienyl)(2,7-diphenyl-3,6-di-tert-butylfluorenyl)zirconium dichloride, di(2-naphthyl)methylene(cyclopentadienyl)(2,7-dimethyl-3,6-di-tert-butylfluorenyl)zirconium dichloride, di(2-naphthyl)methylene(cyclopentadienyl)(2,7-diphenyl-3,6-di-tert-butylfluorenyl)zirconium dichloride, di(naphthylmethyl)methylene(cyclopentadienyl)(2,7-dimethyl-3,6-di-tert-butylfluorenyl)zirconium dichloride, di(naphthylmethyl)methylene(cyclopentadienyl)(2,7-diphenyl-3,6-ditert-butylfluorenyl)zirconium dichloride, di(p-isopropylphenyl)methylene(cyclopentadienyl)(2,7-dimethyl-3,6-di-tert-butylfluorenyl)zirconium dichloride, di(p-isopropylphenyl)methylene(cyclopentadienyl)(2,7-diphenyl-3,6-di-tert-butylfluorenyl)zirconium dichloride, di(biphenylmethyl)methylene(cyclopentadienyl)(2,7-dimethyl-3,6-di-tert-butylfluorenyl)zirconium dichloride, di(biphenylmethyl)methylene(cyclopentadienyl)(2,7-diphenyl-3,6-di-tert-butylfluorenyl)zirconium dichloride, diphenylsilylene(cyclopentadienyl)(2,7-dimethyl-3,6-di-tert-butylfluorenyl)zirconium dichloride, diphenylsilylene(cyclopentadienyl)(2,7-diphenyl-3,6-di-tert-butylfluorenyl)zirconium dichloride and the like.

Further, included as well therein are compounds obtained by changing "zirconium" of the compounds described above to "hafnium" and "titanium" and metallocene compounds obtained by changing "dichloride" thereof to "difluoride", "dibromide" and "diiodide" and changing "dichloride" thereof to "dimethyl" and "methylethyl".

The metallocene compound (I) can be produced by a publicly known process, and a production process therefor shall not specifically be restricted. The publicly known process includes, for example, production processes described in WO2001/27124 and WO2004/087775 which were applied by the present applicants.

The metallocene compound (I) described above can be used alone or in combination of two or more kinds thereof.

(II-1) Organic aluminumoxy compound:

Aluminoxanes which have so far publicly been known can be used as they are as the organic aluminumoxy compound (II-1) (referred to as the component (II-1) in the present specification) used for producing the syndiotactic propylene polymer (A), and they include, to be specific, compounds represented by the following Formula [2] and/or [3]:

[Chem. 2]

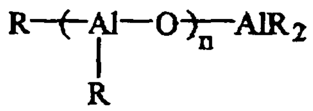

··· [2]

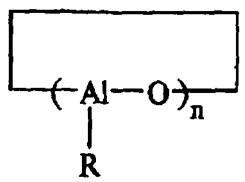

··· [3]

(in Formula [2] described above, R each represents independently a hydrocarbon group having 1 to 10 carbon atoms, and n represents an integer of 2 or more) and (in Formula [3] described above, R represents a hydrocarbon group having 1 to 10 carbon atoms, and n represents an integer of 2 or more). In particular, aluminoxanes in which R is methyl and in which n is 3 or more, preferably 10 or more are used. A small amount of an organic aluminum compound may be mixed in the above aluminoxanes.

In the present invention, benzene-insoluble organic aluminumoxy compounds shown as an example in Japanese Patent Application Laid-Open No. 78687/1990 can be used. Further, capable of being suitably used as well are organic aluminumoxy compounds described in Japanese Patent Application Laid-Open No. 167305/1990 and aluminoxanes having two or more kinds of alkyl groups described in Japanese Patent Application Laid-Open No. 24701/1990 and Japanese Patent Application Laid-Open No. 103407/1991. The "benzene-insoluble" organic aluminumoxy compound means that an Al component soluble in benzene of 60°C accounts for usually 10 % or less, preferably 5 % or less and particularly preferably 2 % or less in terms of an Al atom and that it is insoluble or scarcely soluble in benzene.

The organic aluminumoxy compound includes modified methylaluminoxane represented by the following For-

mula [4]:
[Chem. 3]

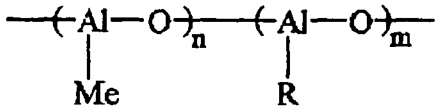

··· [4]

(in Formula [4], R represents a hydrocarbon group having 1 to 10 carbon atoms, and m and n each represent independently an integer of 2 or more).
The above modified methylaluminoxane is prepared by using trimethylaluminum and alkylaluminum other than trimethylaluminum. The above modified methylaluminoxane [4] is generally called MMAO. Such MMAO can be prepared by methods described in US4960878 and US5041584. Products which are prepared by using trimethylaluminum and triisobutylaluminum and in which R is isobutyl are commercially produced under the names of MMAO and TMAO by Tosoh Finechem Corporation and the like. Such MMAO is aluminoxane which is improved in solubility in various solvents and a storage stability, and to be specific, it is soluble in aliphatic hydrocarbons and alicyclic hydrocarbons unlike aluminoxanes which are insoluble or scarcely soluble in benzene such as the compounds represented by Formulas [2] and [3] described above.
Further, the organic aluminumoxy compound includes as well an organic aluminumoxy compound containing boron represented by the following Formula [5]:
[Chem. 4]

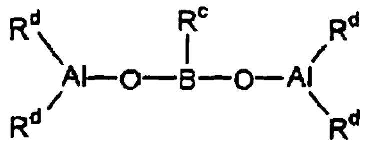

··· [5]

(in Formula [5], $R^c$ represents a hydrocarbon group having 1 to 10 carbon atoms, and $R^d$ may be the same as or different from each other and represents a hydrogen atom, a halogen atom or a hydrocarbon group having 1 to 10 carbon atoms).
(II-2) Compound reacted with the cross-linked metallocene compound (A) to form an ion pair:

A compound (II-2) (hereinafter referred to as "the ionic compound" or "the component (II-2)") which is reacted with the cross-linked metallocene compound (I) used for producing the syndiotactic propylene polymer (A) and which forms an ion pair includes Lewis acids, ionic compounds, borane compounds and carborane compounds each described in Japanese Patent Application Laid-Open No. 501950/1989, Japanese Patent Application Laid-Open No. 502036/1989, Japanese Patent Application Laid-Open No. 179005/1991, Japanese Patent Application Laid-Open No. 179006/1991, Japanese Patent Application Laid-Open No. 207703/1991, Japanese Patent Application Laid-Open No. 207704/1991 and USP 5321106. Further, heteropoly compounds and isopoly compounds can be listed as well. The preferably used ionic compound is a compound represented by the following Formula [6]:

[Chem. 5]

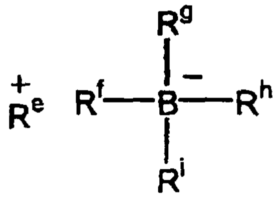

... [6]

In Formula [6], $R^{e+}$ includes $H^+$, carbenium cation, oxonium cation, ammonium cation, phosphonium cation, cycloheptyltrienyl cation, ferrocenium cation having transition metal and the like, and $R^f$ to $R^i$ may be the same as or different from each other and are an organic group, preferably an aryl group.

The carbenium cation described above includes, to be specific, tri-substituted carbenium cations such as triphenylcarbenium cation, tris(methylphenyl)carbenium cation, tris(dimethylphenyl)carbenium cation and the like.

The ammonium cation described above, to be specific, trialkylammonium cations such as trimethylammonium cation, triethylammonium cation, tri(n-propyl)ammonium cation, triisopropylammonium cation, tri(n-butyl)ammonium cation, triisobutylammonium cation and the like, N,N-dialkylanilinium cations such as N,N-dimethylanilinium cation, N,N-diethylanilinium cation, N,N-2,4,6-pentamethylanilinium cation and the like and dialkylammonium cations such as diisopropylammonium cation, dicyclohexylammonium cation and the like.

The phosphonium cation described above includes, to be specific, triarylphosphonium cations such as triphenylphosphonium cation, tris(methylphenyl)phosphonium cation, tris(dimethylphenyl)phosphonium cation and the like.

Among the compounds described above, $R^{e+}$ is preferably the carbenium cation and the ammonium cation, and it is particularly preferably triphenylcarbenium cation, N,N-dimethylanilinium cation and N,N-diethylanilinium cation.

The carbenium salts include, to be specific, triphenylcarbenium borate, triphenylcarbenium tetrakis(pentafluorophenyl)borate, triphenylcarbenium tetrakis(3,5-ditrifluoropmethylhenyl)borate, tris(4-methylphenyl)carbenium tetrakis (pentafluorophenyl)borate, tris(3,5-dimethylphenyl)carbenium tetrakis(pentafluorophenyl)borate and the like.

Trialkyl-substituted ammonium salts, N,N-dialkylanilinium salts, dialkylammonium salts and the like can be listed as the ammonium salts.

The trialkyl-substituted ammonium salts include, to be specific, triethylammonium tetraphenylborate, tripropylammonium tetraphenylborate, tri(n-butyl)ammonium tetraphenylborate, trimethylammonium tetrakis(p-tolyl)borate, trimethylammonium tetrakis(o-tolyl)borate, tri(n-butylammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trtifluoromethylphenyl)borate, tri(n-butyl)ammonium tetrakis(3,5-ditrifluoromethylphenyl)borate, tri(n-butyl)ammonium tetrakis(o-tolyl) borate, dioctadecylmethylammonium tetraphenylborate, dioctadecylmethylammonium tetrakis(p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis(4-trtifluoromethylphenyl)borate, dioctadecylmethylammonium tetrakis(3,5-ditrifluoromethylphenyl)borate, dioctadecylmethylammonium and the like.

The N,N-dialkylanilinium salts include, to be specific, N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis (3,5-ditrifluoromethylphenyl)borate, N,N-2,4,6-pentamethylanilinium tetraphenylborate, N,N-2,4,6-pentamethylanilinium tetrakis(pentafluorophenyl)borate and the like.

The dialkylammonium salts include, to be specific, di(1-propyl)ammonium tetrakis(pentafluorophenyl)borate, dicyclohexylammonium tetraphenylborate and the like.

In addition to the above compounds, ionic compounds disclosed (Japanese Patent Application Laid-Open No. 51676/2004) by the present applicants can be used as well without any limitations.

The ionic compounds described above can be used in a mixture of two or more kinds thereof.

(II-3) Organic aluminum compound:

The organic aluminum compound (II-3) (referred to as "the component (II-3)" in the present specification) used for producing the syndiotactic propylene polymer (A) includes, for example, an organic aluminum compound represented by the following Formula [7] and an alkyl complex compound of a first group metal with aluminum represented by the following Formula [8]:

$$R^a_mAl(OR^b)_nH_pX_q \qquad [7]$$

(in Formula [7], $R^a$ and $R^b$ may be same as or different from each other and represent a hydrocarbon group having 1 to 15, preferably 1 to 4 carbon atoms; X represents a halogen atom; m is a number of $0<m \leqq 3$; n is a number of $0 \leqq n<3$; p is a number of $0 \leqq p<3$; q is a number of $0 \leqq q<3$; and m + n + p + q is 3).
The specific examples of the above compound include tri-n-alkylaluminums such as trimethylaluminum, triethylaluminum, tri-n-butylaluminum, trihexylaluminum, trioctylaluminum and the like;
branched trialkylaluminums such as triisopropylaluminum, triisobutylaluminum, tri-sec-butylaluminum, tri-tert-butylaluminum, tri-2-methylbutylaluminum, tri-3-methylhexylaluminum, tri-2-ethylhexylaluminum and the like;
tricycloalkylaluminums such as tricyclohexylaluminum, tricyclooctylaluminum and the like;
triarylaluminums such as triphenylaluminum, tritolylaluminum and the like;
dialkylaluminum hydrides such as diisopropylaluminum hydride, diisobutylaluminum hydride and the like;
alkenylaluminums represented by a formula $(i\text{-}C_4H_9)_xAl_y(C_5H_{10})_z$ (wherein x, y and z are positive numbers, and $z \leqq 2x$) such as isoprenylaluminum and the like;
alkylaluminum alkoxides such as isobutylaluminum methoxide, isobutylaluminum ethoxide and the like;
dialkylaluminum alkoxides such as dimethylaluminum methoxide, diethylaluminum ethoxide, dibutylaluminum butoxide and the like;
alkylaluminum sesquialkoxides such as ethylaluminum sesquiethoxide, butylaluminum sesquibutoxide and the like;
alkylaluminums which have an average composition represented by a formula $Ra_{2.5}Al(ORb)_{0.5}$ and which are partially converted to alkoxide;
alkylaluminum aryloxides such as diethylaluminum phenoxide, diethylaluminum (2,6-di-t-butyl-4-methylphenoxide) and the like;
dialkylaluminum halides such as dimethylaluminum chloride, diethylaluminum chloride, dibutylaluminum chloride, diethylaluminum bromide, diisobutylaluminum chloride and the like;
alkylaluminum sesquihalides such as ethylaluminum sesquichloride, butylaluminum sesquichloride, ethylaluminum sesquibromide and the like;
partially halogenated alkylaluminums including alkylaluminum dihalide such as ethylaluminum dichloride and the like;
dialkylaluminum hydrides such as diethylaluminum hydride, dibutylaluminum hydride and the like;
other partially hydrogenate alkylaluminums including alkylaluminum dihydrides such as ethylaluminum dihydride, propylaluminum dihydride and the like; and alkylaluminums which are partially converted to alkoxide and partially halogenated, such as ethylaluminum ethoxychloride, butylaluminum butoxychloride, ethylaluminum ethoxybromide and the like.
$$M^2AlR^a_4 \qquad [8]$$

(in Formula [8], $M^2$ represents Li, Na or K, and $R^a$ represent a hydrocarbon group having 1 to 15, preferably 1 to 4 carbon atoms).
$LiAl(C_2H_5)_4$, $LiAl(C_7H_{15})_4$ and the like can be shown as the examples of the above compound.
Further, compounds similar to the compound represented by Formula [8] described above can be used as well, and organic aluminum compounds obtained by bonding two or more aluminum compounds via a nitrogen atom can be listed. To be specific, $(C_2H_5)_2AlN(C_2H_5)Al(C_2H_5)_2$ and the like can be listed as the above compounds.
Trimethylaluminum and triisobutylaluminum are preferably used as the organic aluminum compound (II-3) since they are readily available.
Further, the respective components described above which are carried on a particulate carrier can be used as well.

(III) Carrier:

The carrier (III) (referred to as "the component (III)" in the present specification) used if necessary is an inorganic or organic compound and is a granular or fine particulate solid matter.
Among them, the inorganic compound is preferably porous oxides, inorganic halides, clay, clay minerals or ion exchangeable lamellar compounds.
Capable of being used as the porous oxides are, to be specific, $SiO_2$, $Al_2O_3$, MgO, $ZrO$, $TiO_2$, $B_2O_3$, CaO, ZnO, BaO, $ThO_2$, composites or mixtures containing the above compounds, for example, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$, $SiO_2$-$TiO_2$-MgO and the like. Among them, compounds comprising $SiO_2$ and/or $Al_2O_3$ as principal components are preferred.
The inorganic oxides described above may contain small amounts of carbonates, sulfates, nitrates and oxide

components such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, $Li_2O$ and the like.

The above porous oxides are different in properties according to the kinds and the production processes, and the carriers preferably used have a particle diameter of 3 to 300 μm, preferably 10 to 300 μm and more preferably 20 to 200 μ m, a specific surface area falling in a range of 50 to 1000 $m^2/g$, preferably 100 to 700 $m^2/g$ and a pore volume falling in a range of preferably 0.3 to 3.0 $cm^3/g$. The above carriers are used, if necessary, after burned at 100 to 1000°C, preferably 150 to 700°C.

$MgCl_2$, $MgBr_2$, $MnCl_2$, $MnBr_2$ and the like are used as the inorganic halides. The inorganic halides may be used as they are and may be used after crushed by means of a ball mill, a vibrating mill or the like. Also, compounds obtained by dissolving the inorganic halides in a solvent such as alcohol and the like and then precipitating it in the form of fine particles by a precipitant can be used as well.

Usually, clay is comprised of clay minerals as principal components. Also, the ion exchangeable lamellar compound is a compound having a crystal structure in which planes constituted by an ionic bond are superposed parallel to each other by a weak bonding force, and ions contained therein are exchangeable. A large part of clay minerals comprises ion exchangeablelamellar compounds. Further, not only natural compounds but also synthetic compounds can be used as the above clay, clay minerals and ion exchangeable lamellar compounds.

Further, clay, clay minerals and ionic crystal compounds of a hexagonal closest packing type, an antimony type, a $CdCl_2$ type, a $CdI_2$ type and the like can be shown as the examples of the clay, the clay minerals and the ion exchangeable lamellar compounds.

The above clay and clay minerals include kaolin, bentonite, kibushi clay, gairome clay, allophone, hisingerite, pyrophyllite, micas, montmorillonites, vermiculite, chlorites, palygorskite, kaolinite, nacrite, dickite, halloysite and the like. The ion exchangeable lamellar compound includes crystalline acid salts of polyvalent metals such as $\alpha$-$Zr(HAsO_4)_2 \cdot H_2O$, $\alpha$-$Zr(HAsO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$, $\gamma$-$Ti(NH_4PO_4)_2 \cdot H_2O$ and the like.

In the above clay, clay minerals and ion exchangeable lamellar compounds, a volume of pores having a radius of 20 Å or more which is measured by a mercury penetration method is preferably 0.1 cc/g or more, particularly preferably 0.3 to 5 cc/g. In this connection, the pore volume is measured for a pore radius in a range of 20 to $3 \times 10^4$ Å by a mercury penetration method using a mercury porosimeter.

When the compound havinga volume of pores with a radius of 20 Å or more of less than 0.1 cc/g is used as the carrier, the high polymerization activity tends to be less liable to be obtained.

The clay and the clay minerals are subjected preferably to chemical treatment.

Any of surface treatment in which impurities stuck on a surface are removed, treatment exerting an effect on a crystal structure of clay and the like can be used as the chemical treatment. The chemical treatment includes, to be specific, acid treatment, alkali treatment, salts treatment, organic matter treatment and the like. In the acid treatment, impurities on a surface are removed, and in addition thereto, a surface area is increased by eluting cations such as Al, Fe, Mg and the like present in a crystal structure. In the alkali treatment, a crystal structure of clay is broken, and a change in a structure of the clay is brought about. Further, in the salts treatment and the organic matter treatment, ionic complexes, molecular complexes, organic derivatives and the like are formed, and the surface area and the interlayer distance can be changed.

The ion exchangeable lamellarcompound may be a lamellar compound staying in a state in which a space between layers is expanded by exchanging interlayer exchangeable ions with different large bulky ions making use of an ion exchanging property. The above bulky ions assume a pillar-like role for supporting a lamellar structure and are usually called a pillar. It is called intercalation to introduce another substance into a space between layers of a lamellar compound in the manner described above. A guest compound subjected to intercalation includes cationic inorganic compounds such as $TiCl_4$, $ZrCl_4$ and the like, metal alkoxides such as $Ti(OR)_4$, $Zr(OR)_4$, $PO(OR)_3$, $B(OR)_3$ and the like (R is a hydrocarbon group and the like) and metal hydroxides such as $[Al_{13}O_4(OH)_{24}]^{7+}$, $[Zr_4(OH)_{14}]^{2+}$, $[Fe_3O(OCOCH_3)_6]^+$ and the like. The above compounds are used alone or in combination of two or more kinds thereof. In subjecting the above compounds to intercalation, polymers obtained by hydrolyzing metal alkoxides such as $Si(OR)_4$, $Al(OR)_3$, $Ge(OR)_4$ and the like (R is a hydrocarbon group and the like) and colloidal inorganic compounds such as $SiO_2$ and the like can be allowed to be coexistent as well. The pillar includes oxides produced by subjecting the metal hydroxide ions described above to intercalation between layers and then heating and dehydrating them. Among them, the clays and the clay minerals are preferred, and montmorillonite, vermiculite, pectolite, taeniolite and synthetic mica are particularly preferred.

The clay, the clay minerals and the ion exchangeable lamellar compound may be used as they are and may be used after subjecting them to treatment such as ball milling, sifting and the like. Further, they may be used after newly adding and adsorbing water on them or subjecting them to heating and dehydrating treatment. Further, they may be used alone or in combination of two or more kinds thereof.

When ion exchangeable lamellar silicate is used, a use amount of the organic aluminumoxy compound such

as alkylaluminoxane can be reduced by making use of an ion exchanging property and a lamellar structure in addition to performances as the carrier. The ion exchangeable lamellar silicate is obtained in the form of a principal component of clay minerals in a case of a natural product, and it is not restricted to natural products and may be artificially synthesized products. The specific examples of the clay, the clay minerals and the ion exchangeable lamellar compound include kaolinite, montmorillonite, hectolite, bentonite, smectite, vermiculite, taeniolite, synthetic mica, synthetic hectoliter and the like.

Granular or fine particulate solid matters having a particle diameter falling in a range of 3 to 300 μm, preferably 10 to 300 μm can be given as the organic compound. Capable of being given as the examples thereof are, to be specific, (co)polymers produced by using α-olefins having 2 to 14 carbon atoms such as ethylene, propylene, 1-butene, 4-methyl-1-pentene and the like as principal components, (co)polymers produced by using vinylcyclohexane and styrene as principal components, or copolymers thereof, polymers having a polar functional group obtained by subjecting the above polymers to copolymerization or graft polymerization with polar monomers such as acrylic acid, acrylic esters, maleic anhydride and the like or modified matters thereof. The above particulate carriers can be used alone or in combination of two or more kinds thereof.

The catalyst for olefin polymerization used for producing the syndiotactic propylene polymer (A) can contain, if necessary, a specific organic compound component (IV) described alter in addition to the respective components described above.

(IV) Organic compound component:

In the present invention, the organic compound component (IV) (referred to as "the component (IV)" in the present specification) is used, if necessary, for the purpose of enhancing the polymerization performances and the properties of the polymer produced. The above organic compound includes alcohols, phenolic compounds, carboxylic acids, phosphorus compounds, sulfonic acid salts and the like, but it shall not be restricted to them.

Process of producing the syndiotactic propylene polymer (A):

In the polymerization, the usage of the respective components and an addition order thereof are optionally selected, and the following methods are shown as the examples thereof:

(1) a method in which the component (I) is added alone to the polymerization device,
(2) a method in which the component (I) and the component (II) are added to the polymerization device in an optional order,
(3) a method in which a catalyst component prepared by carrying the component (I) on the carrier (III) and the component (II) are added to the polymerization device in an optional order,
(4) a method in which a catalyst component prepared by carrying the component (II) on the carrier (III) and the component (I) are added to the polymerization device in an optional order and
(5) a method in which a catalyst component prepared by carrying the component (I) and the component (II) on the carrier (III) is added to the polymerization device.

In the respective methods of (2) to (5), at least two or more of the respective catalyst components may be brought into contact in advance.

In the respective methods of (4) and (5) in which the component (II) is carried, the component (II) which is not carried may be added, if necessary, in an optional order. In this case, the component (II) may be the same or different.

A solid catalyst component prepared by carrying the component (I) on the carrier (III) and a solid catalyst component prepared by carrying the component (I) and the component (II) on the carrier (III) may be preliminarily polymerized with an olefin, and a catalyst component may further be carried on the solid catalyst components preliminarily polymerized.

The syndiotactic propylene polymer (A) is obtained by polymerizing or copolymerizing propylene with at least one olefin selected from α-olefins having 2 to 20 carbon atoms (excluding propylene) under the presence of the catalyst for polymerizing olefin described above.

The polymerization can be carried out by both of a liquid phase polymerization method such as solution polymerization and suspension polymerization and a gas phase method. An inactive hydrocarbon medium used in a liquid phase polymerization method includes, to be specific, aliphatic hydrocarbons such as propane, butane, pentane, hexane, heptane, octane, decane, dodecane and the like; alicyclic hydrocarbons such as cyclopentane, cyclohexane, methylcyclopentane and the like; aromatic hydrocarbons such as benzene, toluene, xylene and the like; halogenated hydrocarbons such as ethylene chloride, chlorobenzene, dichloromethane and the like, or mixtures thereof, and olefins themselves can also be used as the solvent.

In polymerizing or copolymerizing propylene with at least one olefin selected from α-olefins having 2 to 20 carbon atoms (excluding propylene) under the presence of the catalyst for polymerizing olefin described above, the component (I) is used in an amount of usually $10^{-9}$ to $10^{-1}$ mole, preferably $10^{-8}$ to $10^{-2}$ mole per liter of the reaction volume.

The component (II-1) is used in such an amount that a mole ratio ((II-1)/M) of the component (II-1) to the whole transition metals (M) contained in the component (I) is usually 0.01 to 5000, preferably 0.05 to 2000. The component (II-2) is used in such an amount that a mole ratio ((II-2)/M) of the component (II-2) to all the transition metals (M) contained in the component (I) is usually 1 to 10, preferably 1 to 5. The component (II-3) is used in such an amount that a mole ratio ((II-3)/M) of an aluminum atom contained in the component (II-3) to all the transition metals (M) contained in the component (I) is usually 10 to 5000, preferably 20 to 2000.

The component (IV) is used in such an amount that a mole ratio ((IV)/(II-1)) is usually 0.01 to 10, preferably 0.1 to 5 when the component (II) is the component (II-1), in such an amount that a mole ratio ((IV)/(II-2)) is usually 0.01 to 10, preferably 0.1 to 5 when the component (II) is the component (II-2) and in such an amount that a mole ratio ((IV) /(II-3)) is usually 0.01 to 2, preferably 0.005 to 1 when the component (II) is the component (II-3).

A temperature of polymerizing the olefin under the presence of the olefin polymerization catalyst falls in a range of usually -50 to +200°C, preferably 0 to 170°C. The polymerization pressure is under a condition of usually an atmospheric pressure to 10 MPa gauge pressure, preferably an atmospheric pressure to 5 MPa gauge pressure, and the polymerization reaction can be carried out by any method of a batch system, a semi-continuous system and a continuous system. Further, the polymerization can be carried out as well by dividing it into two or more stages having different reaction conditions. A molecular weight of the olefin polymer obtained can be controlled by allowing hydrogen to be present in the polymerization system or changing the polymerization temperature. Further, it can be controlled as well by an amount of the component (II) used. When adding hydrogen, an amount thereof is suitably 0.001 to 100 NL per 1 kg of the olefin.

The olefins supplied to the polymerization reaction are propylene and at least one olefin selected from α-olefins having 2 to 20 carbon atoms (excluding propylene). The α-olefin having 4 to 20 carbon atoms is a linear or branched α-olefins having 4 to 20 carbon atoms, preferably 4 to 10 carbon atoms, for example, 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene and the like.

<(B) Propylene· α-olefin copolymer>

The propylene· α-olefin copolymer (B) is a propylene· α-olefin copolymer comprising a propylene unit in an amount of 55 to 90 mole % and at least one olefin unit selected from α-olefins having 2 to 20 carbon atoms (excluding propylene) in an amount of 10 to 45 mole %, and it is characterized by having MFR falling in a range of 0.01 to 100 g/ minute which is measured at 230°C and a load of 2.16 kg according to JIS K-6721 and satisfying at least one of the following requisites (b-1) and (b-2):

(b-1): a syndiotactic pentad ratio (rr) measured by a $^{13}$C-NMR method is 60 % or more; and

(b-2): an intrinsic viscosity [ η ](dL/g) measured at 135°C in decalin and MFR (g/10 minutes) measured at 230°C and a load of 2.16 kg according to JIS K-6721 satisfy the following relational equation:

$$1.50 \times MFR^{(-0.20)} \leqq [\eta] \leqq 2.65 \times MFR^{(-0.20)}$$

The propylene· α-olefin copolymer (B) comprises a propylene unit in an amount of 55 to 90 mole % and α-olefin (excluding propylene) unit having 2 to 20 carbon atoms in an amount of 10 to 45 mole %.

In this regard, the total of the structural unit derived from propylene and the α-olefin (excluding propylene) unit having 2 to 20 carbon atoms is 100 mole %.

The α-olefin having 2 to 20 carbon atoms (excluding propylene) includes ethylene, 3-methyl-1-butene, 1-butene, 1-pentene, 1-hexene, 4-methyl-1-pentene, 1-octene, 1-decene, 1-dodecene, 1-tetradecene, 1-hexadecene, 1-octadecene, 1-eicosene and the like. In particular, ethylene, 1-butene, 1-hexene, 4-methyl-1-pentene and 1-octene are preferred.

Among the propylene· α-olefin copolymers (B) described above, a propylene·ethylene copolymer is one of the preferred embodiments.

In a case of the propylene · ethylene copolymer, a structural unit originating in propylene accounts for preferably 10 to 35 mole %, more preferably 10 to 25 mole %.

Among the propylene· α-olefin copolymers (B) described above, a propylene·ethylene·HAO copolymer which comprises a propylene unit, an ethylene unit and a structural unit of any (referred to as a HAO comonomer) of 1-butene, 1-hexene, 4-methyl-1-pentene and 1-octene and in which a proportion (mole %) of the ethylene unit is larger than a proportion (mole %) of the HAO comonomer unit is one of the preferred embodiments.
The propylene · ethylene copolymer and the propylene · ethylene · HAO copolymer which are polymers falling in the above preferred ranges satisfy preferably both of the requisites (b-1) and (b-2) described above.
The propylene · α-olefin copolymer (B) used in the present invention has MFR falling in a range of preferably 0.01 to 100 g/10 minutes, more preferably 0.02 to 100 g/10 minutes which is measured at 230°C and a load of 2.16 kg according to JIS K-6721.
The propylene · α-olefin copolymer (B) used in the present invention satisfies at least one of the following requisites (b-1) and (b-2):

(b-1): a syndiotactic triad ratio (rr ratio, triad syndiotacticity) measured by a $^{13}$C-NMR method is 60 % or more; and
(b-2): an intrinsic viscosity [ η ] (dL/g) measured at 135°C in decalin and MFR (g/10 minutes, 230°C and a load of 2.16 kg) described above satisfy the following relational equation:

$$1.50 \times MFR^{(-0.20)} \leqq [\eta] \leqq 2.65 \times MFR^{(-0.20)}$$

First, the requisite (b-1) shall be explained.
(b-1): The propylene · α-olefin copolymer (B) has a syndiotactic triad ratio (rr ratio, triad syndiotacticity) of 60 % or more, preferably 70 % or more and more preferably 75 % or more which is measured by a $^{13}$C-NMR method, and the propylene· α-olefin copolymer (B) having an rr ratio falling in the above range has a good compatibility with the syndiotactic propylene polymer (A) and is preferred.
The polymer satisfying the requisite (b-1) can be obtained by copolymerizing propylene with α-olefin under the presence of, for example, a catalyst with which syndiotactic polypropylene can be produced, and it may be produced under the presence of, for example, a catalyst described later.
The rr ratio is determined from the absorption intensities of Prr (an absorption intensity originating in methyl of the second unit in a part in which three propylene units are continuously subjected to syndiotactic bonding) and Pw (an absorption intensity originating in all methyls in the propylene unit) in a $^{13}$C-NMR spectrum according to the following equation (2):

$$\text{rr ratio (\%)} = 100 \times Prr/Pw \qquad (2)$$

In this regard, when absorption originating in mr (absorption originating in both of at least a syndiotactic bond and an isotactic bond among three propylene units, used for determining Pmr (absorption intensity)), absorption originating in rr (absorption originating in methyl of the second unit in a part in which three propylene units are continuously subjected to syndiotactic bonding, used for determining Prr (absorption intensity)) or absorption originating in mm (absorption originating in methyl of the second unit in a part in which three propylene units are continuously subjected to isotactic bonding, used for determining Pmm (absorption intensity)) is overlapped on absorption originating in the comonomer, the rr ratio is calculated from the original values without deducting contribution of the comonomer.
To be specific, the rr ratio is determined by carrying out matters described in [0018] to [0023] in a method for determining "a syndiotacticity parameter (SP value)" described in [0018] to [0031] of Japanese Patent Application Laid-Open No. 097325/2002 and calculating from an integrated intensity of signals in the first region, the second region and the third region according to the equation (2) described above.
In the present invention, particularly the $rr_1$ value, to be specific, the value determined according to the method for determining "a syndiotacticity parameter (SP value)" described in [0018] to [0031] of Japanese Patent Application Laid-Open No. 097325/2002 is 60 % or more, preferably 65 % or more and more preferably 70 % or more. The $rr_1$ value is, in other words, a value obtained by deducting contribution of the comonomer when absorption originating in mr (absorption originating in both of at least a syndiotactic bond and an isotactic bond among three propylene units, used for determining Pmr (absorption intensity)), absorption originating in rr (absorption originating in methyl of the second unit in a part in which three propylene units are continuously subjected to syndiotactic bonding, used for determining Prr (absorption intensity)) or absorption originating in mm (absorption originating in methyl of the second unit in a part

in which three propylene units are continuously subjected to isotactic bonding, used for determining Pmm (absorption intensity)) is overlapped on absorption originating in the comonomer in calculating the rr value described above.

In measurement of the rr value and the $rr_1$ value, NMR measurement is carried out, for example, in the following manner. That is, 0.35 g of the sample is dissolved in 2.0 ml of hexachlorobutadiene by heating. This solution is filtrated through a glass filter (G2), and then 0.5 ml of deuterated benzene is added thereto. An NMR tube having a minor diameter of 10 mm is charged with the above solution and subjected to $^{13}$C-NMR measurement at 120°C by means of a GX-400 type NMR measuring apparatus manufactured by JEOL Ltd. The integration frequency is set to 8,000 or more.

Next, the requisite (b-2) shall be explained.

(b-2): In the propylene· α-olefin copolymer (B) used in the present invention, an intrinsic viscosity [ η ] (dL/g) measured at 135°C in decalin and MFR (g/10 minutes) measured at 230°C and a load of 2.16 kg satisfy the following relational equation:

$$1.50 \times MFR^{(-0.20)} \leqq [\eta] \leqq 2.65 \times MFR^{(-0.20)}$$

more preferably

$$1.80 \times MFR^{(-0.20)} \leqq [\eta] \leqq 2.50 \times MFR^{(-0.20)}$$

The propylene· α-olefin copolymer (B) satisfying the relational equation described above has a good compatibility with the syndiotactic propylene polymer (A) and is preferred.

The propylene· α-olefin copolymer (B) satisfying the equation described above can be obtained by copolymerizing propylene with α-olefin under the presence of, for example, a catalyst with which syndiotactic polypropylene can be produced, and it may be produced under the presence of, for example, a catalyst described later. The above material has good compatibility with the syndiotactic propylene polymer (A) and is preferred.

The propylene· α-olefin copolymer satisfying (b-2) shows large MFR as compared with conventional isotactic propylene-based copolymers at the same [ η ].

As described in Macromolecules 31, p. 1335 to 1340 (1998), this is considered to originate in a difference between an inter-entanglement molecular weight (reported as Me = 6900 (g/mol) in the paper) of isotactic polypropylene and an inter-entanglement molecular weight (reported as Me = 2170 (g/mol) in the paper) of syndiotactic polypropylene. That is, it is considered that a material having a syndiotactic structure has more inter-entanglement and higher MFR than a material having an isotactic structure at the same [ η ].

As described above, the propylene· α-olefin copolymer (B) satisfying at least one of (b-1) and (b-2) is a polymer having a stereoregularity which is different from that of a propylene· α-olefin copolymer having an isotactic structure, and it is considered to have a syndiotactic structure. This is considered to allow the propylene· α-olefin copolymer (B) to have good compatibility with the component (A).

The propylene· α-olefin copolymer (B) has an intrinsic viscosity [ η ] of 0.1 to 10 dL/g, preferably 0.5 to 8.0 dL/g, more preferably 1.0 to 7.0 dL/g and further preferably 1.0 to 5.0 dL/g which is measured at 135°C in decalin.

The propylene · α-olefin copolymer (B) has a crystallinity of preferably 20 % or less, more preferably 0 to 15 % which is measure by X-ray diffraction.

The propylene · α-olefin copolymer (B) has a single glass transition temperature, and usually the glass transition temperature (Tg) obtained by differential scanning calorimeter (DSC) measurement is preferably 0°C or lower. If the propylene· α-olefin copolymer (B) has a glass transition temperature (Tg) falling in the range described above, it is excellent in a cold resistance and a low temperature characteristic.

The differential scanning calorimeter measurement is carried out, for example, in the following manner. An aluminum pan for exclusive use is charged with about 10.00 mg of the sample and heated from 30°C up to 200°C at 200°C/minute by means of DSCRDC220 manufactured by Seiko Instruments Inc., and it is held at 200°C for 5 minutes. Then, it is cooled from 200°C down to -100°C at 10°C/minute, and it is held at -100°C for further 5 minutes. Next, the glass transition temperature (Tg) described above is determined from an endothermic curve in heating at 10°C/ minute.

The propylene· α-olefin copolymer (B) has a molecular weight distribution (Mw/Mn, calibrated on polystyrene, Mw: weight-average molecular weight, Mn: number-average molecular weight) of preferably 3.5 or less, more preferably 3.0 or less and further preferably 2.5 or less, asmeasured by GPC.

The propylene· α-olefin copolymers (B) used in the present invention can be produced by polymerizing propylene with at least one olefin selected from α-olefins having 2 to 20 carbon atoms (excluding propylene) under the presence

of a catalyst for olefin polymerization comprising at least one compound selected from (I') a cross-linked metallocene compound represented by the following Formula [9], (II) (II-1) an organic aluminumoxy compound, (II-2) a compound reacted with the cross-linked metallocene compound (I') described above to form an ion pair and (II-3) an organic aluminum compound, but the production process shall not be restricted to the above process as long as the requisites of the propylene· α-olefin copolymers (B) are satisfied.

[Chem. 6]

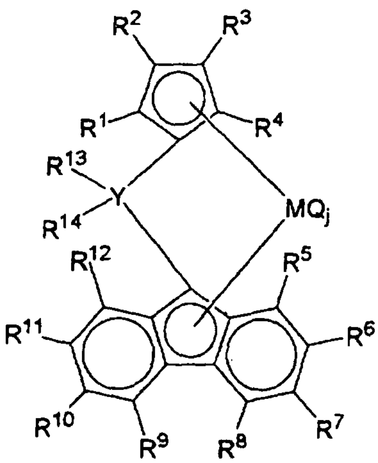

· · · [9]

(in Formula [9], $R^5$, $R^2$, $R^3$, $R^4$, $R^5$, $R^8$, $R^9$ and $R^{12}$ are atoms or groups selected from a hydrogen atom, a hydrocarbon group and a silicon-containing group, and they may be the same as or different from each other; $R^6$ and $R^{11}$ are the same atom or the same group selected from a hydrogen atom, a hydrocarbon group and a silicon-containing group; $R^7$ and $R^{10}$ are the same atom or the same group selected from a hydrogen atom, a hydrocarbon group and a silicon-containing group; $R^6$, $R^7$, $R^{10}$ and $R^{11}$ are not hydrogen atoms all together (that is, all of $R^6$, $R^7$, $R^{10}$ and $R^{11}$ are not hydrogen atoms at the same time); $R^2$ and $R^3$ may be combined with each other to form a ring; and adjacent groups among $R^5$ to $R^{12}$ may be combined with each other to form rings;

$R^{13}$ and $R^{14}$ are selected from an aryl group having 6 to 18 carbon atoms, an alkyl group having 1 to 40 carbon atoms, an alkylaryl group having 6 to 40 carbon atoms, a fluoroaryl group having 6 to 20 carbon atoms, a fluoroalkylaryl group having 7 to 40 carbon atoms, a chloroaryl group having 6 to 20 carbon atoms, a chloroalkylaryl group having 7 to 40 carbon atoms, a bromoaryl group having 6 to 20 carbon atoms, a bromoalkylaryl group having 7 to 40 carbon atoms, an iodoaryl group having 6 to 20 carbon atoms and an iodoalkylaryl group having 7 to 40 carbon atoms, and they may be the same as or different from each other; at least one of $R^{13}$ and $R^{14}$ is selected from an aryl group having 7 to 18 carbon atoms, a chloroaryl group having 6 to 20 carbon atoms, a chloroalkylaryl group having 7 to 40 carbon atoms, a bromoaryl group having 6 to 20 carbon atoms, a bromoalkylaryl group having 7 to 40 carbon atoms, an iodoaryl group having 6 to 20 carbon atoms, an iodoalkylaryl group having 7 to 40 carbon atoms and a fluoroalkylaryl group having 7 to 40 carbon atoms; M is Ti, Zr or Hf; Y is carbon or silicon; Q may be selected from halogen, a hydrocarbon group, neutral, conjugated or non-conjugated diene having 10 or less carbon atoms, an anionic ligand and a neutral ligand which can be coordinated with a lone electron pair in the same combination or different combinations; and j is an integer of 1 to 4).

The specific examples of the cross-linked metallocene compound represented by Formula [9] described above (referred to as "the component (1')" in the present specification) shall be shown below, but the scope of the present invention shall not specifically be restricted by them. In this connection, octamethyloctahydrodibenzofluorene shows a structure represented by Formula [10]; octamethyltetrahydrodicyclopentafluorene shows a structure represented by Formula [11]; and dibenzofluorene shows a structure represented by Formula [12].

[Chem. 7]

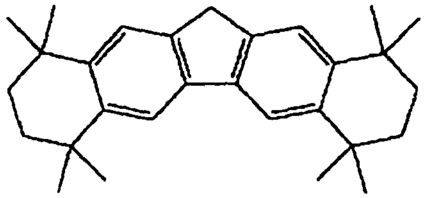

... [10]

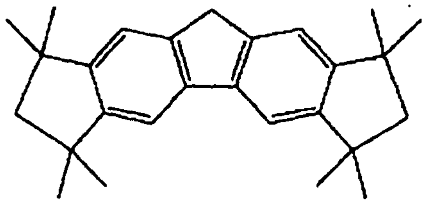

... [11]

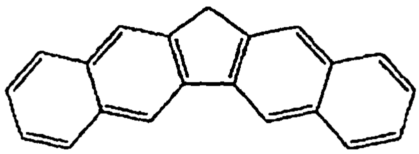

... [12]

di(p-chlorophenyl)methylene(cyclopentadienyl)(2,7-di-tert-butylfluorenyl)zirconium dichloride, di(p-chlorophenyl)methylene(cyclopentadienyl)(3,6-di-tert-butylfluorenyl)zirconium dichloride, di(p-chlorophenyl)methylene(cyclopentadienyl)-(octamethyloctahydrodibenzofluorenyl)zirconium dichloride, di(p-chlorophenyl)methylene(cyclopentadienyl)-(octamethyltetrahydrodicyclopentafluorenyl)zirconium dichloride, di(p-chlorophenyl)methylene(cyclopentadienyl)-(dibenzofluorenyl)zirconium dichloride, di(p-chlorophenyl)methylene(cyclopentadienyl)(2,7-diphenyl-3,6-di-tert-butylfluorenyl)zirconium dichloride, di(p-chlorophenyl)methylene(cyclopentadienyl)(2,7-dimethyl-3,6-di-tert-butylfluorenyl)zirconium dichloride, di(p-chlorophenyl)methylene(cyclopentadienyl)(2,7-(trimethylphenyl)-3,6-di-tert-butylfluorenyl)zirconium dichloride, di(p-chlorophenyl)methylene(cyclopentadienyl)(2,7-(dimethylphenyl)-3,6-di-tert-butylfluorenyl) zirconium dichloride, di(p-chlorophenyl)methylene(cyclopentadienyl)-(2,3,6,7-tetra-tert-butylfluorenyl)zirconium dichloride, di(m-chlorophenyl)methylene(cyclopentadienyl)(2,7-di-tert-butylfluorenyl)zirconium dichloride, di(m-chlorophenyl)-methylene(cyclopentadienyl)(3,6-di-tert-butylfluorenyl)-zirconium dichloride, di(m-chlorophenyl)methylene(cyclopentadienyl)-(octamethyloctahydrodibenzofluorenyl)zirconium dichloride, di(m-chlorophenyl)methylene(cyclopentadienyl)-(octamethyltetrahydrodicyclopentafluorenyl)zirconium dichloride, di(m-chlorophenyl)methylene(cyclopentadienyl)-(dibenzofluorenyl)zirconium dichloride, di(m-chlorophenyl)methylene(cyclopentadienyl)(2,7-diphenyl-3,6-di-tert-butylfluorenyl)zirconium dichloride, di(m-chlorophenyl)methylene(cyclopentadienyl)(2,7-dimethyl-3,6-di-tert-butylfluorenyl)zirconium dichloride, di(m-chlorophenyl)methylene(cyclopentadienyl)(2,7-(trimethylphenyl)-3,6-di-tert-butylfluorenyl)zirconium dichloride, di(m-chlorophenyl)methylene(cyclopentadienyl)(2,7-(dimethylphenyl)-3,6-di-tert-butylfluorenyl)zirconium dichloride, di(m-chlorophenyl)methylene(cyclopentadienyl)-(2,3,6,7-tetra-tert-butylfluorenyl)zirconium dichloride, di(p-bromophenyl)methylene(cyclopentadienyl)(2,7-di-tert-butylfluorenyl)zirconium dichloride, di(p-bromophenyl)-methylene(cyclopentadienyl)(3,6-di-tert-butylfluorenyl)-zirconium dichloride, di(p-bromophenyl)methylene-(cyclopentadienyl)(octamethyloctahydrodibenzofluorenyl)-zirconium dichloride, di(p-bromophenyl)methylene-(cyclopentadienyl)(octamethyltetrahydrodicyclopentafluorenyl) -zirconium dichloride, di(p-bromophenyl)methylene-(cyclopentadienyl)(dibenzofluorenyl)zirconium dichloride, di(p-bromophenyl)methylene(cyclopentadienyl)(2,7-diphenyl-3,6-di-tert-butylfluorenyl)zirconium dichloride, di(p-bromophenyl)methylene(cyclopentadienyl)(2,7-dimethyl-3,6-di-tert-butylfluorenyl)zirconium dichloride, di(p-bromophenyl)-methylene(cyclopentadienyl)(2,7-(trimethylphenyl)-3,6-di-tert-butylfluorenyl)zirconium dichloride, di(p-bromophenyl)-methylene(cyclopentadienyl)(2,7-(dimethylphenyl)-3,6-di-tert-butylfluorenyl)zirconium dichloride, di(p-bromophenyl)-methylene(cyclopentadienyl)(2,3,6,7-tetra-tert-butylfluorenyl)zirconium dichloride, di(m-bromophenyl)-methylene(cyclopentadienyl)(2,7-di-tert-butylfluorenyl)-zirconium dichloride, di (m-bromophenyl)methylene-(cyclopentadienyl)(3,6-di-tert-butylfluorenyl)zirconium dichloride, di(m-bromophenyl)methylene(cyclopentadienyl)-(octamethyloctahydrodibenzofluorenyl)zirconium dichloride, di(m-bromophenyl)methylene(cyclopentadienyl)-(octamethyltetrahydrodicyclopentafluorenyl)zirconium dichloride, di(m-bromophenyl)methylene(cyclopentadienyl)-(dibenzofluorenyl)zirconium dichloride, di(m-bromophenyl)methylene(cyclopentadienyl)(2,7-diphenyl-3,6-di-tert-butylfluorenyl)zirconium dichloride, di(m-bromophenyl)-methylene(cyclopentadienyl)(2,7-dimethyl-3,6-di-tert-butylfluorenyl)zirconium dichloride, di(m-bromophenyl)-methylene(cyclopentadienyl)(2,7-(trimethylphenyl)-3,6-di-tert-butylfluorenyl)zirconium dichloride, di(m-bromophenyl)-methylene(cyclopentadienyl)(2,7-(dimethylphenyl)-3,6-di-tert-butylfluorenyl)zirconium dichloride, di(m-bromophenyl)-methylene(cyclopentadienyl)(2,3,6,7-tetra-tert-butylfluorenyl)zirconium dichloride, di(p-iodophenyl)methylene(cyclopentadienyl)(2,7-di-tert-butylfluorenyl)zirconium dichloride, di (p-iodophenyl)-methylene(cyclopentadienyl)(3,6-di-tert-butylfluorenyl)-zirconium dichloride, di(p-iodophenyl)methylene-(cyclopentadienyl)(octamethyloctahydrodibenzofluorenyl)-zirconium dichloride, di(p-iodophenyl)methylene-(cyclopentadienyl)(octamethyltetrahydrodicyclopentafluorenyl) -zirconium dichloride, di(p-iodophenyl)methylene-(cyclopentadienyl)(dibenzofluorenyl)zirconium dichloride, di(p-iodophenyl)methylene(cyclopentadienyl)(2,7-diphenyl-3,6-di-tert-butylfluorenyl)zirconium dichloride, di(p-iodophenyl)-methylene(cyclopentadienyl)(2,7-dimethyl-3,6-di-tert-butylfluorenyl)zirconium dichloride, di(p-iodophenyl)-methylene(cyclopentadienyl)(2,7-(trimethylphenyl)-3,6-di-tert-butylfluorenyl)zirconium dichloride, di(p-iodophenyl)-methylene(cyclopentadienyl)(2,7-(dimethylphenyl)-3,6-di-tert-butylfluorenyl)zirconium dichloride, di(p-iodophenyl)-methylene(cyclopentadienyl)(2,3,6,7-tetra-tert-butylfluorenyl)zirconium dichloride, di(m-trifluoromethylphenyl)methylene(cyclopentadienyl)(2,7-di-tert-butylfluorenyl)zirconium dichloride, di(m-trifluoromethylphenyl)methylene(cyclopentadienyl)(3,6-di-tert-butylfluorenyl)zirconium dichloride, di(m-trifluoromethylphenyl)methylene(cyclopentadienyl)-(octamethyloctahydrodibenzofluorenyl)zirconium dichloride, di(m-trifluoromethyl-phenyl)methylene(cyclopentadienyl)-(octamethyltetrahydrodicyclopentafluorenyl)zirconium dichloride, di (m-trifluoromethyl-phenyl)methylene-(cyclopentadienyl)(dibenzofluorenyl)zirconium dichloride, di(m-trifluoromethyl-phenyl)methylene(cyclopentadienyl)(2,7-diphenyl-3,6-di-tert-butylfluorenyl)zirconium dichloride, di(m-trifluoromethyl-phenyl)methylene(cyclopentadienyl)(2,7-dimethyl-3,6-di-tert-butylfluorenyl)zirconium dichloride, di(m-trifluoromethyl-phenyl)methylene(cyclopentadienyl)(2,7-(trimethylphenyl)-3,6-di-tert-butylfluorenyl)zirconium dichloride, di(m-trifluoromethyl-phenyl)methylene-(cyclopentadienyl)(2,7-(dimethylphenyl)-3,6-di-tert-butylfluorenyl)zirconium dichloride, di (m-trifluoromethylphenyl)methylene(cyclopentadienyl)(2,3,6,7-tetra-tert-butylfluorenyl)zirconium dichloride, di(p-trifluoromethylphenyl)methylene(cyclopentadienyl)(2,7-di-tert-butylfluorenyl)zirconium dichloride, di(p-trifluoromethylphenyl) methylene(cyclopentadienyl)(3,6-di-tert-butylfluorenyl)zirconium dichloride, di(p-trifluoromethylphenyl)methylene(cyclopentadienyl)-(octamethyloctahydrodibenzofluorenyl)zirconium dichloride, di(p-trifluoromethyl-phenyl)methylene(cyclopentadienyl)-(octamethyltetrahydrodicyclopentafluorenyl)zirconium dichloride, di(p-trifluoromethyl-phenyl)methylene-(cyclopentadienyl)(dibenzofluorenyl)zirconium dichloride, di(p-trifluoromethyl-phenyl)methylene(cyclopentadienyl) (2,7-diphenyl-3,6-di-tert-butylfluorenyl)zirconium dichloride, di(p-trifluoromethyl-phenyl)methylene(cyclopentadienyl) (2,7-dimethyl-3,6-di-tert-butylfluorenyl)zirconium dichloride, di(p-trifluoromethyl-phenyl)methylene(cyclopentadienyl) (2,7-(trimethylphenyl)-3,6-di-tert-butylfluorenyl)zirconium dichloride, di(p-trifluoromethyl-phenyl)methylene-(cyclopentadienyl)(2,7-(dimethylphenyl)-3,6-di-tert-butylfluorenyl)zirconium dichloride, di(p-trifluoromethylphenyl)methylene(cyclopentadienyl)(2,3,6,7-tetra-tert-butylfluorenyl)zirconium dichloride, di(p-trichloromethylphenyl)methylene(cyclopentadienyl)(2,7-di-tert-butylfluorenyl)zirconium dichloride, di(p-trichloromethylphenyl) methylene (cyclopentadienyl) (3,6-di-tert-butylfluorenyl)zirconium dichloride, di(p-trichloromethylphenyl)methylene(cyclopentadienyl)-(octamethyloctahydrodibenzofluorenyl)zirconium dichloride, di(p-trichloromethyl-phenyl)methylene(cyclopentadienyl)-(octamethyltetrahydrodicyclopentafluorenyl)zirconium dichloride, di(p-trichloromethyl-phenyl)methylene-(cyclopentadienyl)(dibenzofluorenyl)zirconium dichloride, di(p-trichloromethyl-phenyl)methylene(cyclopentadienyl)(2,7-diphenyl-3,6-di-tert-butylfluorenyl)zirconium dichloride, di(p-trichloromethyl-phenyl)methylene(cyclopentadienyl)(2,7-dimethyl-3,6-di-tert-butylfluorenyl)zirconium dichloride, di(p-trichloromethyl-phenyl)methylene(cyclopentadienyl)(2,7-(trimethylphenyl)-3,6-di-tert-butylfluorenyl)zirconium dichloride, di(p-trichloromethyl-phenyl)methylene-(cyclopentadienyl)(2,7-(dimethylphenyl)-3,6-di-tert-butylfluorenyl)zirconium dichloride, di(p-trichloromethylphenyl)methylene(cyclopentadienyl)(2,3,6,7-tetra-tert-butylfluorenyl)zirconium dichloride, di(m-trichloromethylphenyl)methylene(cyclopentadienyl)(2,7-di-tert-butylfluorenyl) zirconium dichloride, di(m-trichloromethylphenyl)methylene(cyclopentadienyl)(3,6-di-tert-butylfluorenyl)zirconium dichloride, di(m-trichloromethyl-phenyl)methylene(cyclopentadienyl)-(octamethyloctahydrodibenzofluorenyl)zirconium dichloride, di(m-trichloromethyl-phenyl)methylene(cyclopentadienyl)-(octamethyltetrahydrodicyclopentafluorenyl)zirconium dichloride, di(m-trichloromethyl-phenyl)methylene-(cyclopentadienyl)(dibenzofluorenyl)zirconium dichloride, di(m-trichloromethyl-phenyl)methylene(cyclopentadienyl)(2,7-diphenyl-3,6-di-tert-butylfluorenyl)zirconium dichloride, di(m-trichloromethyl-phenyl)methylene(cyclopentadienyl)(2,7-dimethyl-3,6-di-tert-butylfluorenyl)zirconium dichloride, di(m-trichloromethyl-phenyl)methylene(cyclopentadienyl)(2,7-(trimethylphenyl)-3,6-di-tert-butylfluorenyl)zirconium dichloride, di(m-trichloromethyl-phenyl)methylene-(cyclopentadienyl)(2,7-(dimethylphenyl)-3,6-di-tert-butylfluorenyl)zirconium dichloride, di(m-trichloromethyl-phenyl)methylene(cyclopentadienyl)(2,3,6,7-tetra-tert-butylfluorenyl)zirconium dichloride, di(p-biphenyl)-methylene(cyclopentadienyl)(2,7-di-tert-butylfluorenyl)-zirconium dichloride, di(p-biphenyl) methylene-(cyclopentadienyl)(3,6-di-tert-butylfluorenyl)zirconium dichloride, di(p-biphenyl)methylene(cyclopentadienyl)-(octamethyloctahydrodibenzofluorenyl)zirconium dichloride, di(p-biphenyl)methylene(cyclopentadienyl)-(octamethyltetrahydrodicyclopentafluorenyl)zirconium dichloride, di(p-biphenyl)methylene(cyclopentadienyl)-(dibenzofluorenyl)zirconium dichloride, di(p-biphenyl)-methylene(cyclopentadienyl)(2,7-diphenyl-3,6-di-tert-butylfluorenyl)zirconium dichloride, di(p-biphenyl)-methylene(cyclopentadienyl)(2,7-dimethyl-3,6-di-tert-butylfluorenyl)zirconium dichloride, di(p-biphenyl)methylene-(cyclopentadienyl)(2,7-(trimethylphenyl)-3,6-di-tert-butylfluorenyl)zirconium dichloride, di(p-biphenyl)methylene-(cyclopentadienyl)(2,7-(dimethylphenyl)-3,6-di-tert-butylfluorenyl)zirconium dichloride, di(p-biphenyl)-methylene(cyclopentadienyl)(2,3,6,7-tetra-tert-butylfluorenyl)zirconium dichloride, di(3,5-ditrifluoromethyl-phenyl) methylene(cyclopentadienyl)(2,7-di-tert-butylfluorenyl)zirconium dichloride, di(3,5-ditrifluoromethyl-phenyl)methylene (cyclopentadienyl)(3,6-di-tert-butylfluorenyl)zirconium dichloride, di(3,5-ditrifluoromethyl-phenyl)methylene(cyclopentadienyl)-(octamethyloctahydrodibenzofluorenyl)zirconium dichloride, di(3,5-ditrifluoromethyl-phenyl)methylene(cyclopentadienyl)-(octamethyltetrahydrodicyclopentafluorenyl)zirconium dichloride, di(3,5-ditrifluoromethyl-phenyl)methylene-(cyclopentadienyl)(dibenzofluorenyl)zirconium dichloride, di(3,5-ditrifluoromethyl-phenyl)methylene(cyclopentadienyl)-(2,7-diphenyl-3,6-di-tert-butylfluorenyl)zirconium dichloride, di(3,5-ditrifluoromethyl-phenyl)methylene(cyclopentadienyl)-(2,7-dimethyl-3,6-di-tert-butylfluorenyl)zirconium dichloride, di(3,5-ditrifluoromethyl-phenyl)methylene (cyclopentadienyl)-(2,7-(trimethylphenyl)-3,6-di-tert-butylfluorenyl)zirconium dichloride, di(3,5-ditrifluoromethyl-phenyl) methylene-(cyclopentadienyl)(2,7-(dimethylphenyl)-3,6-di-tert-butylfluorenyl)zirconium dichloride, di(3,5-ditrifluoromethyl-phenyl)methylene(cyclopentadienyl)(2,3,6,7-tetra-tert-butylfluorenyl)zirconium dichloride, di(3,5-dichloromethyl-phenyl)methylene(cyclopentadienyl)(2,7-di-tert-butylfluorenyl)zirconium dichloride, di(3,5-dichloromethyl-phenyl)methylene(cyclopentadienyl)(3,6-di-tert-butylfluorenyl)zirconium dichloride, di(3,5-dichloromethyl-phenyl)methylene(cyclopentadienyl)-(octamethyloctahydrodibenzofluorenyl)zirconium dichloride, di(3,5-dichloromethyl-phenyl)methylene (cyclopentadienyl)-(octamethyltetrahydrodicyclopentafluorenyl)zirconium dichloride, di(3,5-dichloromethyl-phenyl) methylene-(cyclopentadienyl)(dibenzofluorenyl)zirconium dichloride, di(3,5-dichloromethyl-phenyl)methylene(cyclopentadienyl)(2,7-diphenyl-3,6-di-tert-butylfluorenyl)zirconium dichloride, di(3,5-dichloromethyl-phenyl)methylene(cyclopentadienyl)(2,7-dimethyl-3,6-di-tert-butylfluorenyl)zirconium dichloride, di(3,5-dichloromethyl-phenyl)methylene(cyclopentadienyl)(2,7-(trimethylphenyl)-3,6-di-tert-butylfluorenyl)zirconium dichloride, di(3,5-dichloromethyl-phenyl)methylene-(cyclopentadienyl)(2,7-(dimethylphenyl)-3,6-di-tert-butylfluorenyl)zirconium dichloride, di(3,5-dichloromethyl-phenyl)methylene-(cyclopentadienyl)(2,3,6,7-tetra-tert-butylfluorenyl)zirconium dichloride, di(4-chloronaphthyl)methylene(cyclopentadienyl)(2,7-di-tert-butylfluorenyl)zirconium dichloride, di(4-chloronaphthyl)-methylene(cyclopentadienyl) (3,6-di-tert-butylfluorenyl)zirconium dichloride, di (4- chloronaphthyl)-methylene (cyclopentadienyl)-(octamethyloctahydrodibenzofluorenyl) zirconium dichloride, di (4- chloronaphthyl) methylene (cyclopentadienyl)-(octamethyltetrahydrodicyclopentafluorenyl) zirconium dichloride, di (4- chloronaphthyl) methylene (cyclopentadienyl)-(dibenzofluorenyl) zirconium dichloride, di (4- chloronaphthyl)-methylene (cyclopentadienyl) (2,7- diphenyl- 3,6- di- tert- butylfluorenyl) zirconium dichloride, di (4- chloronaphthyl)-methylene (cyclopentadienyl) (2,7- dimethyl- 3,6- di- tert- butylfluorenyl) zirconium dichloride, di (4- chloronaphthyl)-methylene (cyclopentadienyl) (2,7-(trimethylphenyl)- 3,6- di- tert- butylfluorenyl) zirconium dichloride, di (4- chloronaphthyl)-methylene (cyclopentadienyl)-(2,7-(dimethylphenyl)- 3,6- di- tert- butylfluorenyl) zirconium dichloride, di (4- chloronaphthyl)-methylene (cyclopentadienyl)-(2,3,6,7- tetra- tert- butylfluorenyl) zirconium dichloride, di (3- chloronaphthyl)-methylene (cyclopentadienyl) (2,7- di- tert- butylfluorenyl)-zirconium dichloride, di (3-chloronaphthyl) methylene-(cyclopentadienyl) (3,6- di- tert- butylfluorenyl)-zirconium dichloride, di (3- chloronaphthyl) methylene (cyclopentadienyl)-(octamethyloctahydrodibenzofluorenyl) zirconium dichloride, di (3- chloronaphthyl) methylene (cyclopentadienyl)-(octamethyltetrahydrodicyclopentafluorenyl) zirconium dichloride, di (3- chloronaphthyl) methylene (cyclopentadienyl)-dibenzofluorenyl) zirconium dichloride, di (3- chloronaphthyl)-methylene-(cyclopentadienyl) (2,7- diphenyl- 3,6- di- tert- butylfluorenyl)-zirconium dichloride, di (3- chloronaphthyl)-methylene-(cyclopentadienyl) (2,7-dimethyl- 3,6- di- tert- butylfluorenyl) zirconium dichloride, di (3- chloronaphthyl)-methylene (cyclopentadienyl) (2,7-(trimethylphenyl)- 3,6- di- tert- butylfluorenyl) zirconium dichloride, di (3- chloronaphthyl)-methylene (cyclopentadienyl) (2,7-(dimethylphenyl)- 3,6- di- tert- butylfluorenyl) zirconium dichloride, di (3- chloronaphthyl)-methylene (cyclopentadienyl) (2,3,6,7- tetra- tert- butylfluorenyl) zirconium dichloride, di (5- chloronaphthyl)-methylene (cyclopentadienyl) (2,7-di- tert- butylfluorenyl)-zirconium dichloride, di (5- chloronaphthyl) methylene-(cyclopentadienyl) (3,6- di- tert- butylfluorenyl) zirconium dichloride, di (5- chloronaphthyl) methylene (cyclopentadienyl)-(octamethyloctahydrodibenzofluorenyl) zirconium dichloride,  di (5- chloronaphthyl) methylene (cyclopentadienyl)-(octamethyltetrahydrodicyclopentafluorenyl) zirconium dichloride, di (5- chloronaphthyl) methylene (cyclopentadienyl)-(dibenzofluorenyl) zirconium dichloride, di (5-chloronaphthyl)-methylene (cyclopentadienyl) (2,7- diphenyl- 3,6- di- tert- butylfluorenyl) zirconium dichloride, di (5-chloronaphthyl)-methylene (cyclopentadienyl) (2,7- dimethyl- 3,6- di- tert- butylfluorenyl) zirconium dichloride, di (5-chloronaphthyl)-methylene (cyclopentadienyl) (2,7-(trimethylphenyl)- 3,6- di- tert- butylfluorenyl) zirconium dichloride, di (5- chloronaphthyl)-methylene (cyclopentadienyl) (2,7-(dimethylphenyl)- 3,6- di- tert- butylfluorenyl) zirconium dichloride, di (5- chloronaphthyl)-methylene (cyclopentadienyl) (2,3,6,7- tetra- tert- butylfluorenyl) zirconium dichloride, phenyl (p- chlorophenyl)-methylene (cyclopentadienyl) (2,7- di- tert- butylfluorenyl)-zirconium dichloride, phenyl (p- chlorophenyl) methylene-(cyclopentadienyl) (3,6- di- tert- butylfluorenyl) zirconium dichloride, phenyl (p- chlorophenyl) methylene (cyclopentadienyl)-(octamethyloctahydrodibenzofluorenyl) zirconium dichloride, phenyl (p- chlorophenyl) methylene (cyclopentadienyl)-(octamethyltetrahydrodicyclopentafluorenyl) zirconium dichloride, phenyl (p- chlorophenyl) methylene(cyclopentadienyl)-(dibenzofluorenyl) zirconium dichloride, phenyl (p- chlorophenyl) methylene (cyclopentadienyl) (2,7-diphenyl- 3,6- di- tert- butylfluorenyl) zirconium dichloride, phenyl (p- chlorophenyl) methylene (cyclopentadienyl) (2,7-dimethyl- 3,6- di- tert- butylfluorenyl) zirconium dichloride, phenyl (p- chlorophenyl) methylene (cyclopentadienyl) (2,7-(trimethylphenyl)- 3,6- di- tert- butylfluorenyl) zirconium dichloride, phenyl (p- chlorophenyl) methylene (cyclopentadienyl)-(2,7-(dimethylphenyl)- 3,6- di- tert- butylfluorenyl) zirconium dichloride, phenyl (p- chlorophenyl) methylene (cyclopentadienyl)-(2,3,6,7- tetra- tert- butylfluorenyl) zirconium dichloride, phenyl (m- chlorophenyl) methylene (cyclopentadienyl) (2,7- di- tert- butylfluorenyl) zirconium dichloride, phenyl (m- chlorophenyl)-methylene (cyclopentadienyl) (3,6-di- tert- butylfluorenyl)-zirconium dichloride, phenyl (m- chlorophenyl) methylene-(cyclopentadienyl) (octamethyloctahydrodibenzofluorenyl)-zirconium dichloride, phenyl (m- chlorophenyl) methylene-(cyclopentadienyl) (octamethyltetrahydrodicyclopentafluorenyl) -zirconium dichloride, phenyl (m- chlorophenyl) methylene-(cyclopentadienyl) (dibenzofluorenyl) zirconium dichloride, phenyl (m- chlorophenyl) methylene-(cyclopentadienyl) (2,7- diphenyl- 3,6- di- tert- butylfluorenyl) zirconium dichloride, phenyl (m- chlorophenyl) methylene (cyclopentadienyl) (2,7- dimethyl- 3,6- di- tert- butylfluorenyl) zirconium dichloride, phenyl (m- chlorophenyl) methylene (cyclopentadienyl) (2,7-(trimethylphenyl)- 3,6- di- tert-butylfluorenyl) zirconium dichloride, phenyl (m- chlorophenyl) methylene (cyclopentadienyl)-(2,7-(dimethylphenyl)- 3,6-di- tert- butylfluorenyl) zirconium dichloride, phenyl (m- chlorophenyl) methylene (cyclopentadienyl)-(2,3,6,7- tetra- tert-butylfluorenyl) zirconium dichloride, phenyl (m- trifluoromethyl- phenyl) methylene (cyclopentadienyl)-(2,7- di- tert-butylfluorenyl) zirconium dichloride, phenyl (m- trifluoromethyl- phenyl) methylene (cyclopentadienyl) (3,6- di- tert-butylfluorenyl) zirconium dichloride, phenyl (m- trifluoromethyl- phenyl) methylene (cyclopentadienyl)-(octamethyloctahydrodibenzofluorenyl) zirconium dichloride, phenyl (m- trifluoromethyl- phenyl) methylene (cyclopentadienyl)-(octamethyltetrahydrodicyclopentafluorenyl) zirconium dichloride, phenyl (m- trifluoromethyl- phenyl) methylene-(cyclopentadienyl) (dibenzofluorenyl) zirconium dichloride, phenyl (m- trifluoromethyl- phenyl) methylene (cyclopentadienyl)-(2,7- diphenyl- 3,6- di- tert- butylfluorenyl) zirconium dichloride, phenyl (m- trifluoromethyl- phenyl) methylene (cyclopentadienyl)-(2,7- dimethyl- 3,6- di- tert- butylfluorenyl) zirconium dichloride, phenyl (m- trifluoromethyl- phenyl) methylene (cyclopentadienyl)-(2,7-(trimethylphenyl)- 3,6- di- tert- butylfluorenyl) zirconium dichloride, phenyl (m- trifluoromethyl- phenyl) methylene-(cyclopentadienyl) (2,7-(dimethylphenyl)- 3,6- di- tert- butylfluorenyl) zirconium dichloride, phenyl (m- trifluoromethyl- phenyl) methylene (cyclopentadienyl) (2,3,6,7- tetra- tert- butylfluorenyl) zirconium dichloride, naphthyl (p- chlorophenyl)-methylene (cyclopentadienyl) (2,7- di- tert- butylfluorenyl)-zirconium dichloride, naphthyl (p-chlorophenyl) methylene-(cyclopentadienyl) (3,6- di- tert- butylfluorenyl) zirconium dichloride, naphthyl (p- chlorophenyl) methylene-(cyclopentadienyl) (octamethyloctahydrodibenzofluorenyl)-zirconium dichloride, naphthyl (p- chlorophenyl) methylene-(cyclopentadienyl) (octamethyltetrahydrodicyclopentafluorenyl) -zirconium dichloride, naphthyl (p- chlorophenyl) methylene-(cyclopentadienyl) (dibenzofluorenyl) zirconium dichloride, naphthyl (p- chlorophenyl) methylene (cyclopentadienyl) (2,7- diphenyl- 3,6- di- tert- butylfluorenyl) zirconium dichloride, naphthyl (p- chlorophenyl) methylene (cyclopentadienyl) (2,7- dimethyl- 3,6- di- tert- butylfluorenyl) zirconium dichloride, naphthyl (p- chlorophenyl) methylene (cyclopentadienyl) (2,7-(trimethylphenyl)- 3,6- di- tert- butylfluorenyl) zirconium dichloride, naphthyl (p- chlorophenyl) methylene-(cyclopentadienyl) (2,7-(dimethylphenyl)- 3,6- di- tert- butylfluorenyl) zirconium dichloride, naphthyl (p- chlorophenyl) methylene (cyclopentadienyl) (2,3,6,7- tetra- tert- butylfluorenyl) zirconium dichloride, naphthyl (m- chlorophenyl) methylene (cyclopentadienyl) (2,7- di- tert- butylfluorenyl) zirconium dichloride, naphthyl (m- chlorophenyl) methylene (cyclopentadienyl) (3,6- di- tert- butylfluorenyl) zirconium dichloride, naphthyl (m- chlorophenyl) methylene (cyclopentadienyl)-(octamethyloctahydrodibenzofluorenyl) zirconium dichloride, naphthyl (m- chlorophenyl) methylene (cyclopentadienyl)-(octamethyltetrahydrodicyclopentafluorenyl) zirconium dichloride, naphthyl (m- chlorophenyl) methylene-(cyclopentadienyl) (dibenzofluorenyl) zirconium dichloride, naphthyl (m- chlorophenyl) methylene (cyclopentadienyl) (2,7- diphenyl- 3,6- di- tert- butylfluorenyl) zirconium dichloride, naphthyl (m- chlorophenyl) methylene (cyclopentadienyl) (2,7- dimethyl- 3,6- di- tert- butylfluorenyl) zirconium dichloride, naphthyl (m- chlorophenyl) methylene (cyclopentadienyl) (2,7-(trimethylphenyl)- 3,6- di- tert- butylfluorenyl) zirconium dichloride, naphthyl (m- chlorophenyl) methylene-(cyclopentadienyl) (2,7-(dimethylphenyl)- 3,6- di- tert- butylfluorenyl) zirconium dichloride, naphthyl (m- chlorophenyl) methylene (cyclopentadienyl) (2,3,6,7- tetra- tert- butylfluorenyl) zirconium dichloride, naphthyl (m- trifluoromethyl- phenyl) methylene (cyclopentadienyl) (2,7- di- tert- butylfluorenyl) zirconium dichloride, naphthyl (m- trifluoromethyl- phenyl) methylene (cyclopentadienyl) (3,6- di- tert- butylfluorenyl) zirconium dichloride, naphthyl (m- trifluoromethyl- phenyl) methylene (cyclopentadienyl)-(octamethyloctahydrodibenzofluorenyl) zirconium dichloride, naphthyl (m- trifluoromethylphenyl) methylene (cyclopentadienyl)-(octamethyltetrahydrodicyclopentafluorenyl) zirconium dichloride, naphthyl (m- trifluoromethylphenyl) methylene (cyclopentadienyl) (dibenzofluorenyl) zirconium dichloride, naphthyl (m- trifluoromethyl- phenyl) methylene-(cyclopentadienyl) (2,7- diphenyl- 3,6- di- tert- butylfluorenyl)-zirconium dichloride, naphthyl (m- trifluoromethyl- phenyl)-methylene (cyclopentadienyl) (2,7- dimethyl- 3,6- di- tert- butylfluorenyl) zirconium dichloride, naphthyl (m- trifluoromethyl- phenyl) methylene (cyclopentadienyl) (2,7-(trimethylphenyl)- 3,6- di- tert- butylfluorenyl) zirconium dichloride, naphthyl (m- trifluoromethyl- phenyl) methylene-(cyclopentadienyl) (2,7-(dimethylphenyl)- 3,6- di- tert- butylfluorenyl) zirconium dichloride, naphthyl (m- trifluoromethyl- phenyl) methylene (cyclopentadienyl) (2,3,6,7- tetra- tert-butylfluorenyl) zirconium dichloride, (p- tolyl) (p- chlorophenyl) methylene (cyclopentadienyl) (2,7- di- tert- butylfluorenyl) zirconium dichloride, (p- tolyl) (p- chlorophenyl) methylene (cyclopentadienyl) (3,6- di- tert- butylfluorenyl) zirconium

dichloride, (p- tolyl) (p- chlorophenyl) methylene (cyclopentadienyl)-(octamethyloctahydrodibenzofluorenyl) zirconium dichloride, (p- tolyl) (p- chlorophenyl) methylene (cyclopentadienyl)-(octamethyltetrahydrodicyclopentafluorenyl) zirconium dichloride, (p- tolyl) (p- chlorophenyl) methylene-(cyclopentadienyl) (dibenzofluorenyl) zirconium dichloride, (p-tolyl) (p- chlorophenyl) methylene (cyclopentadienyl) (2,7- diphenyl- 3,6- di- tert- butylfluorenyl) zirconium dichloride, (p-tolyl) (p- chlorophenyl) methylene (cyclopentadienyl) (2,7- dimethyl- 3,6- di- tert- butylfluorenyl) zirconium dichloride, (p-tolyl) (p- chlorophenyl) methylene (cyclopentadienyl) (2,7-(trimethylphenyl)- 3,6- di- tert- butylfluorenyl) zirconium dichloride, (p- tolyl) (p- chlorophenyl) methylene-(cyclopentadienyl) (2,7-(dimethylphenyl)- 3,6- di- tert- butylfluorenyl) zirconium dichloride, (p- tolyl) (p- chlorophenyl) methylene (cyclopentadienyl) (2,3,6,7- tetra- tert- butylfluorenyl) zirconium dichloride, (p- tolyl) (m- chlorophenyl) methylene (cyclopentadienyl) (2,7- di- tert- butylfluorenyl) zirconium dichloride, (p- tolyl) (m- chlorophenyl) methylene (cyclopentadienyl) (3,6- di- tert- butylfluorenyl) zirconium dichloride, (p- tolyl) (m- chlorophenyl) methylene (cyclopentadienyl)-(octamethyloctahydrodibenzofluorenyl) zirconium dichloride, (p- tolyl) (m- chlorophenyl) methylene (cyclopentadienyl)-(octamethyltetrahydrodicyclopentafluorenyl) zirconium dichloride, (p- tolyl) (m- chlorophenyl) methylene-(cyclopentadienyl) (dibenzofluorenyl) zirconium dichloride, (p- tolyl) (m- chlorophenyl) methylene (cyclopentadienyl) (2,7- diphenyl- 3,6- di- tert- butylfluorenyl) zirconium dichloride, (p- tolyl) (m- chlorophenyl) methylene (cyclopentadienyl) (2,7- dimethyl- 3,6- di- tert- butylfluorenyl) zirconium dichloride, (p- tolyl) (m- chlorophenyl) methylene (cyclopentadienyl) (2,7-(trimethylphenyl)- 3,6- di- tert- butylfluorenyl) zirconium dichloride, (p- tolyl) (m- chlorophenyl) methylene-(cyclopentadienyl) (2,7-(dimethylphenyl)- 3,6- di- tert- butylfluorenyl) zirconium dichloride, (p- tolyl) (m- chlorophenyl) methylene (cyclopentadienyl) (2,3,6,7- tetra- tert- butylfluorenyl) zirconium dichloride, (p- tolyl) (m- trifluoromethyl- phenyl) methylene (cyclopentadienyl) (2,7- di- tert- butylfluorenyl) zirconium dichloride, (p- tolyl) (m- trifluoromethyl-phenyl) methylene (cyclopentadienyl) (3,6- di- tert- butylfluorenyl) zirconium dichloride, (p- tolyl) (m- trifluoromethyl-phenyl) methylene (cyclopentadienyl)-(octamethyloctahydrodibenzofluorenyl) zirconium dichloride, (p- tolyl) (m- trifluoromethylphenyl) methylene (cyclopentadienyl)-(octamethyltetrahydrodicyclopentafluorenyl) zirconium dichloride, (p-tolyl) (m- trifluoromethyl- phenyl) methylene-(cyclopentadienyl) (dibenzofluorenyl) zirconium dichloride, (p- tolyl) (m-trifluoromethyl- phenyl) methylene (cyclopentadienyl)-(2,7- diphenyl- 3,6- di- tert- butylfluorenyl) zirconium dichloride, (p- tolyl) (m- trifluoromethyl- phenyl)-methylene (cyclopentadienyl) (2,7- dimethyl- 3,6- di- tert- butylfluorenyl) zirconium dichloride, (p- tolyl) (m- trifluoromethyl- phenyl) methylene (cyclopentadienyl) (2,7-(trimethylphenyl)- 3,6- di- tert- butylfl uorenyl) zirconium dichloride, (p- tolyl) (m- trifluoromethyl- phenyl)-methylene (cyclopentadienyl) (2,7-(dimethylphenyl)-3,6- di- tert- butylfluorenyl) zirconium dichloride, (p- tolyl) (m- trifluoromethyl- phenyl) methylene-(cyclopentadienyl) (2,3,6,7- tetra- tert- butylfluorenyl) zirconium dichloride and the like.

Further, compounds obtained by changing "zirconium" of the compounds described above to "hafnium" and "titanium" and metallocene compounds obtained by changing "dichloride" thereof to "difluoride", "dibromide" and "diiodide" and changing "dichloride" thereof to "dimethyl" and "methylethyl" are included as well in the metallocene compounds represented by Formula [9].

The metallocene compound (I') described above can be produced by referring to publicly known processes. The publicly known process includes, for example, a production process described in WO04/029062 which was applied by the present applicants.

The metallocene compounds described above can be used alone or in combination of two or more kinds thereof.

The same compounds as the organic aluminumoxy compound (II-1) used for producing the syndiotactic propylene polymer (A) described above can be used as the organic aluminumoxy compound (II-1) used for producing the propylene· α-olefin copolymers (B).

The same compounds as the compound reacted with the cross-linked metallocene compound (I) to form an ion pair which is used for producing the syndiotactic propylene polymer (A) described above can be used as the compound (II-2) reacted with the cross-linked metallocene compound (I') to form an ion pair which is used for producing the propylene· α-olefin copolymers (B).

The same compounds as the organic aluminum compound (II-3) used for producing the syndiotactic polypropylene polymer (A) described above can be used as the organic aluminum compound (II-3) used for producing the propylene· α-olefin copolymers (B).

The respective components described above can be used as well by carrying on a particulate carrier. The same carriers as the carrier used for producing the syndiotactic propylene polymer (A) described above can be used as the carrier used if necessary.

Process of producing the propylene· α-olefin copolymer (B):

In the polymerization, the usage of the respective components and the addition order thereof are optionally selected, and the following method is shown as the example thereof.

A method in which the component (I') and the component (II) are added to the polymerization device in an optional order.

In the method described above, at least two or more of the respective catalyst components may be brought into contact

in advance.

In polymerizing olefin under the presence of the catalyst for olefin polymerization described above, the component (I') is used in an amount of usually $10^{-9}$ to $10^{-1}$ mole, preferably $10^{-8}$ to $10^{-2}$ mole per liter of the reaction volume.

The component (II-1) is used in such an amount that a mole ratio ((II-1)/M) of the component (II-1) to all the transition metal atoms (M) contained in the component (I') is usually 0.01 to 5,000, preferably 0.05 to 2,000. The component (II-2) is used in such an amount that a mole ratio ((II-2)/M) of an aluminum atom contained in the component (II-2) to all the transition metals (M) contained in the component (I') is usually 1 to 1,000, preferably 1 to 500. The component (II-3) is used in such an amount that a mole ratio ((II-3)/M) of the component (II-3) to the transition metals (M) contained in the component (a) is usually 1 to 10,000, preferably 1 to 5,000.

The propylene· α-olefin copolymers (B) is obtained by polymerizing propylene with at least one olefin selected from α-olefins having 2 to 20 carbon atoms (excluding propylene) under the presence of the catalyst for olefin polymerization described above usually in a liquid phase. In this case, a hydrocarbon solvent is usually used, and α-olefins may be used as the solvent. The hydrocarbon solvent includes, to be specific, the same ones as described above. The copolymerization may be carried out by either method of a batch method and a continuous method.

The α-olefins which can be used for the polymerization include, for example, ethylene, 1-butene, 1-pentene, 3-methyl-1-butene, 1-pentene, 1-hexene, 4-methyl-1-pentene, 3-methyl-1-pentene, 1-octene, 1-decene, 1-dodecene, 1-tetradecene, 1-hexadecene, 1-octadecene, 1-eicosene and the like. The α-olefins can be used alone or in combination of two or more kinds thereof.

When carrying out the copolymerization by a batch method under the presence of the catalyst for olefin polymerization, a concentration of the metallocene compound in the polymerization system is usually 0.00005 to 1 millimole, preferably 0.0001 to 0.50 millimole per liter of the reaction volume.

The reaction time (average retention time when the copolymerization is carried out by a continuous method) is, though varied according to the conditions such as the catalyst concentration, the polymerization temperature and the like, usually 5 minutes to 3 hours, preferably 10 minutes to 1.5 hours.

Propylene and at least one olefin selected from α-olefins having 2 to 20 carbon atoms (excluding propylene) each described above are supplied respectively to the polymerization system in such an amount that the propylene· α-olefin copolymer (B) having the specific composition described above is obtained. In the copolymerization, a molecular weight modifier such as hydrogen and the like can be used as well.

When propylene is copolymerized with at least one olefin selected from α-olefins having 2 to 20 carbon atoms (excluding propylene) in the manner described above, the propylene· α-olefin copolymer (B) is obtained usually in the form of a polymerization solution containing the copolymer (B). This polymerization solution is treated by an ordinary method, and the propylene· α-olefin copolymer (B) is obtained.

The copolymerization reaction is carried out usually on the conditions of a temperature falling in a range of 40 to 200°C, preferably 40 to 180°C and more preferably 50 to 150°C and a pressure falling in a range of exceeding 0 to 10 MPa, preferably 0.5 to 10 MPa and more preferably 0.5 to 7 MPa.

<Ethylene· α-olefin random copolymer (C)>

The ethylene· α-olefin random copolymer (C) used in the present invention is preferably an ethylene · α-olefin copolymer comprising an ethylene unit in an amount of 50 to 99 mole % and an α-olefin unit having 3 to 20 carbon atoms other than ethylene in an amount of 1 to 50 mole % (provided that the total of ethylene and the α-olefin is 100 mole %).

Preferably, the ethylene unit is contained in an amount of 60 to 95 mole %, and the α-olefin unit having 3 to 20 carbon atoms other than ethylene is contained in an amount of 5 to 40 mole % (provided that the total of ethylene and the α-olefin is 100 mole %); the density is 910 to 850 kg/$m^3$; and the MFR measured at 190°C and a load of 2.16 kg according to JIS K-6721 falls in a range of 0.01 to 100 g/10 minutes.

More preferably, the ethylene unit is contained in an amount of 80 to 95 mole %, and the α-olefin unit having 3 to 20 carbon atoms other than ethylene is contained in an amount of 5 to 20 mole % (provided that the total of ethylene and the α-olefin is 100 mole %); the density is 900 to 860 kg/$m^3$; and the MFR measured at 190°C and a load of 2.16 kg according to JIS K-6721 falls in a range of 0.05 to 10 g/10 minutes.

The α-olefin copolymerized with ethylene is α-olefin having 3 to 20 carbon atoms and includes, for example, propylene, 1-butene, 1-pentene, 1-hexene, 1-heptene, 1-octene, 1-nonene, 1-decene, 1-undecene, 1-dodecene, 1-hexadecene, 1-octadecene, 1-nonadecene, 1-eicosene, 4-methyl-1-pentene and the like. Among them, α-olefin having 3 to 10 carbon atoms is preferred. Propylene, 1-butene, 4-methyl-1-pentene, 1-hexene and 1-octene are particularly preferred. The above α-olefins can be used alone or in combination of two or more kinds thereof.

The ethylene· α-olefin random copolymer (C) may contain other polymerizable units in addition to the above units as long as the object of the present invention is not damaged.

The above other polymerizable units include, for example, vinyl compounds such as styrene, vinylcyclopentene, vinylcyclohexene, vinylnorbornane and the like; vinyl esters such as vinyl acetate and the like; unsaturated organic acids

or derivatives thereof such as maleic anhydride and the like; conjugate dienes such as butadiene, isoprene, pentadiene, 2,3-dimethylbutadiene and the like; and non-conjugate polyenes such as 1,4-hexadiene, 1,6-octadiene, 2-methyl-1,5-hexadiene, 6-methyl-1,5-heptadiene, 7-methyl-1,6-octadiene, dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethy-5-isopropenyl-2-norbornene, 2,3-diisopropylidene-5-norbornene, 2-ethylidene-3-isopropenyl-5-norbornene, 2-propenyl-2,2-norbornadiene and the like. It is one of the preferred embodiments as well that the non-conjugate dienes and the non-conjugate polyenes are not contained.

The ethylene· α-olefin random copolymer (C) may contain the above other polymerizable units in an amount of 10 mole % or less, preferably 5 mole % or less and more preferably 3 mole % or less.

The ethylene· α-olefin random copolymer (C) includes, to be specific, ethylene·propylene random copolymer, ethylene · 1-butene random copolymer, ethylene · propylene · 1-butene random copolymer, ethylene · propylene · ethylidenenorbornene random copolymer, ethylene·1-butene·1-octene random copolymer, ethylene · 4-methyl-1-pentene random copolymer, ethylene · 1-hexene random copolymer, ethylene·1-octene random copolymer and the like. Among them, particularly preferred are ethylene·propylene random copolymer, ethylene·1-butene random copolymer, ethylene · 1-butene · 1-octene random copolymer, ethylene·1-hexene random copolymer, ethylene·1-octene random copolymer and the like. The above copolymers may be used in combination of two or more kinds thereof.

The ethylene· α-olefin random copolymer (C) used in the present invention has a crystallinity of usually 40 % or less, preferably 0 to 39 % and more preferably 0 to 35 % which is measure by an X-ray diffraction method. The ethylene· α-olefin random copolymer (C) used in the present invention has an intrinsic viscosity [ η ] of usually 0.1 to 10 dL/g, more preferably 0.5 to 5 dL/g which is measured at 135°C in decalin.

In the present invention, a balance between the impact resistance and the transparency is particularly enhanced by using the component (C).

The ethylene· α-olefin random copolymer described above can be produced by conventional and publicly known methods using a vanadium-based catalyst, a titanium-based catalyst or a metallocene-based catalyst. Commercial products may be used as the ethylene· α-olefin random copolymer (C), and "Tafmer" (trade name) manufactured by Mitsui Chemicals Inc. may be used.

Polypropylene-based resin composition:

A polypropylene-based resin composition comprising the syndiotactic propylene polymer (A), the propylene· α-olefin copolymer (B) and the ethylene· α-olefin random copolymer (C) used if necessary is blended, if necessary, with various additives such as an antioxidant, a UV absorber, an antistatic agent, a nucleator, a lubricant, a flame retardant, an antiblocking agent, a colorant, inorganic and organic fillers and various synthetic resins, and then the mixture is melt-kneaded and can be pelletized to prepare pellets.

The polypropylene resin used in the present invention comprises preferably:

(A) 85 to 25 parts by weight of the syndiotactic propylene polymer described above,
(B) 15 to 75 parts by weight (provided that the total of (A) and (B) is 100 parts by weight) of the propylene· α-olefin copolymer described above and, if necessary,
(C) 1 to 100 parts by weight of the ethylene· α-olefin random copolymer (C) described above based on total 100 parts by weight of (A) and (B).

If the contents of the respective components fall in the above ranges, obtained is a film which is excellent particularly in heat resistance (Tm of the film) and which is excellent in transparency, flexibility and low-temperature impact resistance, and therefore it is preferred.

When a polypropylene resin film having good flexibility and excellent low-temperature impact resistance is required, preferred is a polypropylene resin comprising:

(A) 80 to 25 parts by weight of the syndiotactic propylene polymer described above,
(B) 20 to 75 parts by weight (provided that the total of (A) and (B) is 100 parts by weight) of the propylene· α-olefin copolymer described above and
(C) 1 to 100 parts by weight of the ethylene· α-olefin copolymer described above based on total 100 parts by weight of (A) and (B).

More preferably, the polypropylene resin comprises 75 to 25 parts by weight, further preferably 75 to 35 parts by weight of the syndiotactic propylene polymer (A) and preferably 25 to 75 parts by weight, more preferably 25 to 65 parts by weight of the propylene· α-olefin copolymer (B). The polypropylene resin described above can be formed into the polypropylene-based resin film of the present invention by employing an extrusion method and an inflation method.

<Requisite (6)>

In the polypropylene-based resin constituting the polypropylene-based resin film of the present invention, a concentration ($S_p$) of a propylene unit is 40 to 95 mole %, preferably 45 to 95 mole %; a concentration (SE) of an ethylene unit is 60 to 5 mole %, preferably 55 to 8 mole %; and a concentration ($S_\alpha$) of an α-olefin unit having 4 to 10 carbon atoms is 0 to 15 mole %, preferably 2 to 13 mole % (provided that $S_p + S_E + S_\alpha = 100$ mole % and $S_p/S_E>1$). The above values are measured by measuring methods shown in examples described later. If the polypropylene-based resin comprises a propylene unit, an ethylene unit and an α-olefin unit in the concentration ranges described above, the polypropylene-based resin film tends to exhibit sufficiently transparency, flexibility, mechanical strength, heat resistance and impact resistance.

<Requisite (7)>

In the polypropylene-based resin film of the present invention, an intrinsic viscosity [ η ] of a component (Dsol) soluble in decalin at room temperature satisfies 1.5 to 4.0 dL/g, preferably 1.5 to 3.5 dL/g and more preferably 1.7 to 3.2 dL/g. If an intrinsic viscosity [ η ] of the component (Dsol) soluble in decalin at room temperature falls in the above range, obtained is the polypropylene-based resin film which is excellent particularly in heat resistance, transparency, low-temperature impact resistance, flexibility and fluidity and which is excellent particularly in a balance between low-temperature impact resistance and transparency.

Production process for polypropylene-based resin film:

The polypropylene-based resin constituting the polypropylene-based resin film of the present invention may be a resin having a propylene unit and may be, for example, a composition of a crystalline propylene polymer and an elastomer. The polypropylene-based resin film of the present invention shall not specifically be restricted in a production process, a constitution and a forming method of the polypropylene-based resin as long as it satisfies the characteristics described above.

Considering a hygienic aspect and an economical aspect, an inflation method and a (co)extrusion method are preferably used as the forming method. That is, the film is prepared by an inflation method in which the pellets described above are melt-extruded by means of an extruder and a circular die, extruded via a spiral or slit die, and expanded by predetermined air flow. The cooling method includes a water-cooling system and an air-cooling system.

A water-cooling inflation method shall not specifically be restricted in conditions, and it has preferably a forming temperature of 190 to 280°C and a water-cooling temperature of 10 to 60°C.

Further, the film is prepared by an extrusion method in which the pellets described above are melt-extruded by means of an extruder and a circular die, extruded by means of a coat hanger die and a T-die, and cooled. When a multilayer film is prepared, a multilayer T-die method, a dry lamination method, an extrusion lamination method and the like are used. It shall not specifically be restricted in forming conditions and has preferably a forming temperature of 190 to 280°C and a cooling temperature of 10 to 80°C for a chill roll.

Multilayer film:

The polypropylene-based resin single layer film of the present invention is used not only in a single layer but also suitably used for producing a multilayer film by a coextrusion film producing method. The present invention relates to a multilayer film obtained by the above coextrusion film producing method, wherein a polypropylene-based resin single layer film is used as a base material layer, and an outer layer comprising a polypropylene-based resin is laminated on at least one surface of the base material layer.

In the preferred form of the multilayer film, a polypropylene-based resin (random, homogeneous, syndiotactic or alloy composition and the like) having a thickness of 10 to 50 μm, preferably 15 to 40 μm is preferably laminated on both outer layers of the polypropylene-based resin single layer film of the present invention described above from the viewpoints of heat resistance and an interlayer fusing property. Further, the polypropylene-based resin (random, homogeneous, syndiotactic or alloy composition and the like) having a thickness of 10 to 50 μm, preferably 15 to 40 μm is preferably laminated between two layers of the polypropylene-based resin single layer film of the present invention from the viewpoint of a barriering property.

The layer structure of the multilayer film comprises four or more layers in a certain case. In a case of the multilayer film having a thickness of 250 μ m, the polypropylene-based resin single layer film of the present invention has preferably, though not specifically prescribed, a thickness of 150 μm or more. If the thickness falls in the above range, the film is excellent in a balance between flexibility, transparency and impact resistance. The layer structure thereof may comprise a gas barrier layer, an adhesive layer and the like. The gas barrier layer includes, for example, a

PET layer, an EVOH layer, a cyclic olefin polymer layer and an aluminum-deposited film, and the adhesive layer includes an olefin polymer (Admer) layer into which a polar layer is introduced.

Process of producing containers for foods and medicines:

Containers for foods and medicines comprising the single layer and multilayer films of the present invention are produced by cutting a tube-like or sheet-like film obtained by the forming method described above by an ordinary method, then sealing it by heating, providing it with a mouth member by a method such as heat sealing and the like and turning a shape and a dimension thereof into predetermined ones. The condition of heat sealing is preferably, though depending on a thickness of the film, a condition of usually 120 to 250°C.

EXAMPLES

The present invention shall more specifically be explained below with reference to examples, but the present invention shall by no means be restricted by these examples.
The following analytical methods were used in the present invention.

[1] Amount of a component ($D_{sol}$) soluble in n-decane at room temperature:

The single layer film of the present invention having a size of 20 cm × 20 cm was dipped in 200 ml of n-decane and dissolved by heating at 145°C for 30 minutes. The solution was cooled down to 20 ° C in about 3 hours and left as it was for 30 minutes. Then, the precipitate (hereinafter referred to as the n-decane-insoluble component: Dinsol) was removed by filtration. The filtrate was put in about three times the amount of acetone to precipitate a component dissolved in n-decane (this was referred to as the precipitate (A)). The precipitate (A) was separated from acetone by filtration and dried. The filtrate was concentrated and dried up, but a residue was not observed. An amount of the n-decane-soluble component was determined according to the following equation:

$$\text{amount of n-decane-soluble component (\% by weight)} = [\text{precipitate(A) weight/sample weight}] \times 100$$

[2] Mw/Mn measurement (Mw: weight-average molecular weight, Mn: number-average molecular weight):

A molecular weight distribution (Mw/Mn) was measured in the following manner by means of a gel permeation chromatograph Alliance GPC-2000 type manufactured by Waters Co., Ltd. Separation columns were 2 columns of TSKgel GNH6-HT and 2 columns of TSKgel GNH6- HTL, and a column size was a diameter of 7.5 mm and a length of 300 mm in both columns. The column temperature was 140°C, and o-dichlorobenzene (Wako Pure Chemical Industries, Inc.) for a mobile phase and BHT (Takeda Chemical Industries, Ltd.) 0.025 % by weight as an antioxidant were used, and the flow rate was 1.0 ml/minute. A concentration of the sample was 15 mg/10 mL, and an injection amount of the sample was 500 microliter. A differential refractometer was used as a detector. Standard polystyrene manufactured by Tosoh Corp. was used for a molecular weight of $MW<1000$ and $MW>4 \times 10^6$, and standard polystyrene manufactured by Pressure Chemical Co., Ltd. was used for a molecular weight of $1000 \leqq Mw \leqq 4 \times 10^6$.

[3] Melting point (Tm):

The sample of about 5 mg was heated up to 200°C under nitrogen atmosphere (20 ml/minute) by means of SCPyris1 or DSC7 manufactured by Perkin Elmer, Inc. and held for 10 minutes, and then it was cooled down to 30°C at 10°C/minute. After holding the sample at 30°C for 5 minutes, it was heated up to 200°C at 10°C/minute, wherein the melting point was calculated from the top of a crystalline melting peak, and the heat of fusion was calculated from an integrated value of the peak.
When plural peaks are observed in propylene-based compositions described in the present examples, a peak observed at a highest temperature side is set to Tm.

[4] Intrinsic viscosity [ $\eta$ ]:

An intrinsic viscosity was a value measured in a decalin solvent at 135°C. That is, about 20 mg of a polymer

powder, a pellet or a resin block was dissolved in 15 ml of decalin, and a specific viscosity $\eta_{sp}$ thereof was measured in an oil bath of 135°C. The decalin solvent 5 ml was further added to the above decalin solution to dilute it, and then the specific viscosity $\eta_{sp}$ thereof was measured in the same manner. This dilution operation was further repeated twice, and a value of $\eta_{sp}/C$ when extrapolating the concentration (C) into 0 was determined as the intrinsic viscosity (refer to the following equation).

$$[\eta] = \lim (\eta_{sp}/C) \quad (C \to 0)$$

[5] Propylene unit concentration ($S_p$), ethylene unit concentration ($S_E$) and α-olefin unit concentration ($S_\alpha$) having 4 to 10 carbon atoms:

The contents of ethylene, propylene and α-olefin were determined by measuring in the following manner by means of a JNM GX-500 type NMR measuring apparatus manufactured by JEOL Ltd. The sample 0.35 g was dissolved in 2.0 ml of hexachlorobutadiene by heating. This solution was filtrated through a glass filter (G2), and then 0.5 ml of deuterated benzene was added thereto. The solution was put into a NMR tube having a minor diameter of 10 mm and subjected to $^{13}$C-NMR measurement at 120°C. The integration frequency was set to 10,000 times or more. The compositions of ethylene, propylene and α-olefin were determined by a $^{13}$C-NMR spectrum thus obtained.

[6] MFR (melt flow rate):

Measured at 230°C and a load of 2.16 kg according to JIS K-6721.

[7] Young's modulus (= tensile elastic modulus) of the film:

A sample punched by means of a JIS No. 3 dumbbell according to JIS K6301 was used for evaluation. The sample was subjected to measurement on the conditions of a span space of 30 mm, a pulling rate of 30 mm/minute and 230°C.

[8] Tensile impact strength of the film:

A film formed by means of a heat sealing test equipment TP-701-B manufactured by Tester Sangyo Co., Ltd. was subjected to heat sealing at a temperature (upper limit/lower limit) of 210°C/190°C, a pressure of 0.2 MPa, a time of 5 seconds and a seal width of 150 mm × 20 mm to prepare a sample for measurement.

The sample described above was cut into a rectangular form of 10 mmt according to JIS K7160 to prepare a test piece. It was subjected to a tensile impact test at a hammer 2J, a lifting angle of 149.2° and an impact speed of 3.0 (m/second) by means of a 258 universal impact tester manufactured by Yasuda Manufacturing Co., Ltd.

[9] Light transmittance of the film:

The light transmittance was measured in a solvent of benzyl alcohol according to JIS K7136. Further, the film was subjected to annealing treatment at 120°C for 30 minutes in hot water in an autoclave, and then the same measurement was carried out to determine a reduction rate of the light transmittance.

The details of examples shall be shown below.

<Catalyst synthesis examples>

<Synthesis Example 1>

Dibenzylmethylene(cyclopentadienyl)(3,6-di-tert-butylfluorenyl)zirconium dichloride was produced by a process described in Synthetic Example 3 of Japanese Patent Application Laid-Open No. 189666/2004.

<Synthesis Example 2>

Dibenzylmethylene(cyclopentadienyl)(2,7-diphenyl-3,6-di-tert-butylfluorenyl)zirconium dichloride was produced in the following manner.

Step 1: synthesis of 2,7-dibromo-3,6-di-tert-butyl-fluorene

Propylene carbonate 170 ml was added to 15.22 g (54.7 mmol) of 3,6-di-tert-butylfluorene under nitrogen flow and stirred. N-bromosuccinimide 20.52 g (115 mmol) was added to the above solution, and the solution was heated and stirred at 80°C for 5 hours. After left naturally cooling down, the reaction solution was added to 800 mL of water. It was stirred at room temperature for 15 minutes and filtrated by means of a Kiriyama funnel. A whitish yellow powder thus obtained was washed five times with 10 mL of ethanol. A mixed solution of hexane and a small amount of dichloromethane was added to the above whitish yellow powder and heated at 60°C to dissolve it, and the solution was left standing still at -20°C overnight. A crystalline precipitate was washed three times with 5 mL of hexane to obtain a targeted product in the form of a whitish yellow powder (amount obtained: 21.16 g, yield: 76 %).
$^1$H NMR (270 MHz, $CDCl_3$): δ 1.60 (s, t-Bu(Flu), 18H), 3.75 (s, Flu-9H, 2H), 7.73 (s, Flu, 2H), 7.81 (s, Flu, 2H).
MS (FD) : M/z 436 ($M^+$).

Step 2: synthesis of 3,6-di-tert-butyl-2,7-diphenylfluorene

Anhydrous DME 120 mL was added to 8.15 g (18.7 mmol) of 2,7-dibromo-3,6-di-tert-butylfluorene and 1.08 g (0.93 mmol) of $Pd(PPh_3)$ under nitrogen flow and stirred at room temperature for 20 minutes. An ethanol 20 mL solution of phenyl borate 5.01 g (41.1 mmol) was added to the above solution. A flask in which phenyl borate had been put was washed twice with 4 mL of ethanol, and this solution was added as well to the above solution. After stirring at room temperature for 20 minutes, 37.4 mL (74.8 mmol) of a sodium carbonate aqueous solution of 2.0 mol/L was added thereto and refluxed for 18 hours by heating. After left naturally cooling down, the reaction was finished with 1N hydrochloric acid under cooling in an ice bath. Ether was added thereto to separate the solution. The aqueous layer was extracted twice with diethyl ether, and the extract was put together with the organic layer separated previously. The organic layer was washed twice with a saturated sodium hydrogencarbonate, twice with water and once with a saturated saline solution and dried on magnesium sulfate. The solvent was removed by distillation, and the residue was separated by silica gel chromatography to obtain a whitish yellow powder. A mixed solution of hexane and a small amount of dichloromethane was added to the powder obtained above and heated at 60°C to dissolve it. The solution was left standing still at room temperature for one hour and then left standing still at -20°C for 13 hours. A crystalline precipitate was washed three times with 10 mL of hexane to obtain a targeted product in the form of a whitish yellow powder (amount obtained: 4.36 g, yield: 54 %).
$^1$H NMR (270 MHz, $CDCl_3$): δ 1.29 (s, tBu(Flu), 18H), 3.78 (s, Flu-9H, 2H), 7.16 (s, Flu, 2H), 7.34 (br, PhFlu, 10H), 7.97 (s, Flu, 2H).
MS (FD) : M/z 430 ($M^+$)

Step 3: synthesis of 6,6-dibenzylfulvene

A three-necked flask of 500 mL was charged with 8.0 g (121.0 mmol) of cyclopentadiene and 100 mL of dehydrated THF under nitrogen atmosphere and stirred. This mixed solution was cooled on an ice bath, and 80 mL (125.6 mmol) a hexane solution of n-butyllithium having a concentration of 1.57 mol/L was added thereto. Then, the solution was stirred at room temperature for 3 hours, and a white slurry obtained was cooled on an ice bath. Thereafter, a solution prepared by dissolving 25.0 g (118.0 mmol) of 1,3-diphenyl-2-propanone in 50 mL of dehydrated THF was added thereto. Then, the solution was stirred at room temperature for 12 hours, and a yellow solution obtained was quenched with a saturated $NH_4Cl$ aqueous solution. Hexane 100 mL was added thereto to extract a soluble matter, and the organic phase was washed with water and a saturated saline solution and then dried on magnesium sulfate. The solvent was removed by distillation, and the residue was refined by column chromatography to thereby obtain a targeted product of a yellow solid matter (amount obtained: 3.7 g, yield: 12 %).
$^1$H NMR (270 MHz, $CDCl_3$): δ 3.69 (s, $PhCH_2$, 4H), 6.60 to 6.72 (m, Cp, 4H), 7.13 to 7.32 (m, $PhCH_2$, 10H).

Step 4: synthesis of $(PhCH_2)_2C(Cp)$ (3,6-t-$Bu_2$-2,7-$Ph_2$-Flu)

Anhydrous THF 40 mL was added to 1.60 g (3.71 mmol) of 3,6-di-tert-butyl-2,7-diphenylfluorene under nitrogen flow and stirred. This solution was cooled on an ice bath, and 2.65 mL (4.13 mmol) of a hexane solution of n-butyllithium of 1.56M was added thereto and stirred at room temperature for 2 hours. A red solution obtained was cooled down to -78°C on a dry ice-methanol bath, and a THF 20 mL solution of 6,6-dibenzylfulvene 1.06 g (4.10 mmol) was dropwise added thereto in 20 minutes. Then, the solution was stirred for 18 hours while slowly elevating the temperature up to room temperature. 1N hydrochloric acid 60 mL was added to a blackish red solution obtained to terminate the reaction. Ether 80 mL was added to separate the solution, and a soluble matter was extracted. The organic layer was washed twice with a saturate sodium hydrogencarbonate solution, twice with water and once with a saturate saline solution and

dried on magnesium sulfate. The solvent was removed by distillation, and the residue was refined by silica gel chromatography to thereby obtain a targeted product in the form of a whitish yellow solid matter (amount obtained: 0.59 g, yield: 23 %). $^1$H NMR (270 MHz, $CDCl_3$): δ 1.25 (s, t-Bu(Flu), 18H), 2.66 (br, CpH, 1H), 3.22 (br, $CH_2$Ph, 4H), 4.41 (br, Flu-9H, 1H), 5.85 to 6.51 (m, Cp, 4H), 6.82 to 7.40 (m, Ph(Flu) and $CH_2$Ph and Flu, 22H), 7.67 (s, Flu, 2H).
MS (FD) : M/z 688 ($M^+$).

Step 5: synthesis of $(PhCH_2)_2C$(Cp) (3, 6-t-$Bu_2$-2, 7-$Ph_2$-Flu) $ZrCl_2$

A Schlenk flask of 100 mL was charged with 0.59 g (0. 855 mmol) of $(PhCH_2)_2C$ (Cp) (3, 6-t-$Bu_2$-2,7-$Ph_2$-Flu) and 40 mL of anhydrous diethyl ether under nitrogen atmosphere and stirred. This mixed slurry solution was cooled on an ice bath, and 1.21 mL (1.88 mmol) of a hexane solution of n-butyllithium having a concentration of 1.56 mol/L was added thereto and stirred for 45 hours while slowly elevating the temperature up to room temperature. A red reaction solution obtained was cooled down (-78°C) on a dry ice/methanol bath, and then 0.200 g (0.858 mmol) of zirconium tetrachloride was added thereto. Thereafter, the solution was stirred for 42 hours while slowly elevating the temperature up to room temperature to obtain a reddish orange suspension.

After the solvent was dried up under reduced pressure, the residue was dissolved in hexane in a glove box and washed with hexane by passing through a glass filter packed with celite, and an orange powder which was not dissolved in hexane was extracted with dichloromethane. The solvent contained in the dichloromethane-dissolved part was removed by distillation, and the residue was washed with diethyl ether/cold pentane and dried to thereby obtain a targeted product in the form of an orange powder (amount obtained: 515 mg, yield: 71 %). $^1$H NMR (270 MHz, $CDCl_3$): δ 1.30 (s, t-Bu(Flu), 18H), 3.82 (d,
J = 15.5 Hz, $CH_2$Ph, 2H), 3.93 (d, J = 15.5 Hz, $CH_2$Ph, 2H), 5.80 (t, J = 2.6 Hz, Cp, 2H), 6.25 (t, J = 2.6 Hz, Cp, 2H), 6.97 to 7.34 (m, Ph(Flu) and $CH_2$Ph, 20H), 7.37 (s, Flu, 2H), 8.32 (s, Flu, 2H).
MS (FD): M/z 848 ($M^+$).
Di(p-chlorophenyl)methylene(cyclopentadienyl)-(octamethyloctahydrodibenzofluorenyl)zirconium dichloride was produced by the following method.

<Synthesis Example 3>

Synthesis of di(p-chlorophenyl)methylene(cyclopentadienyl)-(octamethyloctahydrodibenzofluorenyl)zirconium dichloride

(i) Synthesis of 6,6-di(p-chlorophenyl)fulvene

A reaction vessel equipped with a dropping funnel was charged with 40 ml of dehydrated tetrahydrofuran and 2.15 ml (25.9 mmol) of cyclopentadiene under nitrogen atmosphere, and 18.0 ml (28.5 mmol) of a hexane solution of n-butyllithium of 1.58 mol/L was slowly dropwise added and stirred while cooling the above solution at 0°C. Then, a solution prepared by dissolving 5.00 g (19.9 mmol) of 4,4'-dichlorobenzophenone in 30 ml of dehydrated tetrahydrofuran was put in the dropping funnel and slowly dropwise added while cooling at 0°C, and the solution was allowed to go back to room temperature as it was and stirred for a day. This reaction solution was extracted with diethyl ether, and the organic phase was washed with 1N hydrochloric acid, a saturated sodium hydrogencarbonate aqueous solution and a saturated saline solution. The organic phase separated was dried on anhydrous magnesium sulfate, and then magnesium sulfate was removed by filtration. The solvent contained in the filtrate was removed by distillation under reduced pressure by means of a rotary evaporator. The residue was refined by a silica gel column to obtain a targeted product (amount obtained: 3.37 g, yield: 57 %). The targeted product was identified by $^1$H-NMR.
$^1$H NMR spectrum (270 MHz, $CDCl_3$, TMS): δ 6.21 to 6.24 (m, 2H), 6.60 to 6.63 (m, 2H), 7.23 (d, 2H, J = 8.1 Hz), 7.37 (d, 2H, J = 8.6 Hz).

(ii) Synthesis of octamethyloctahydrodibenzofluorene

A three-necked flask of 500 ml which was equipped with a three-way cock, a dropping funnel and a magnetic stirring bar and which was sufficiently substituted with nitrogen was charged with 9.72 g (58.6 mmol) of fluorene and 19.6 g (134 mmol) of 2,5-dimethyl-2,5-hexanediol at room temperature. Dehydrated dichloromethane 85 ml was added thereto and stirred by means of a magnetic stirrer, and then the solution was cooled down to -8°C on an ice bath. Crushed anhydrous aluminum chloride 38.9 g (292 mmol) was added thereto in 70 minutes, and then the mixture was stirred at 0°C for 2 hours. Further, the ice bath was removed, and the solution was stirred at room temperature for 19 hours. After confirming that fluorene disappeared by G.C., a blackish brown solution was poured into 150 ml of ice-cold water and quenched. A soluble matter was extracted with 500 ml of diethyl ether, and then the organic phase was neutralized and

washed with a saturated sodium hydrogencarbonate aqueous solution. The organic phase separated was dried on anhydrous magnesium sulfate, and then magnesium sulfate was removed by filtration. The solvent contained in the filtrate was removed by distillation under reduced pressure by means of a rotary evaporator. The residue was transferred on a Kiriyame funnel and washed 6 times with 10 ml of hexane, and then it was dried under reduced pressure to obtain a targeted product (amount obtained: 12.0 g, yield: 53 %). The targeted product was identified by $^1$H-NMR and FD-MS spectra.

$^1$H-NMR (270 MHz, $CDCl_3$, TMS): δ/ppm 1.3 (s, 12H), 1.4 (s, 12H), 1.7 (s, 8H), 3.8 (s, 2H), 7.4 (s, 2H), 7.6 (s, 2H). MS (FD) : M/z 386 ($M^+$).

(iii) Synthesis of di(p-chlorophenyl)cyclopentadienyl-(octamethyloctahydrodibenzofluorenyl)methane

A reaction vessel equipped with a dropping funnel was charged with 40 ml of dehydrated tetrahydrofuran and 2.35 g (6.08 mmol) of octamethyloctahydrodibenzofluorene described above under nitrogen atmosphere, and 4.62 ml (7.30 mmol) of a hexane solution of n-butyllithium of 1.58 mol/L was slowly dropwise added thereto and stirred while cooling the above solution at 0°C. 1,3-Dimethyl-2-imidazolidinone 0.86 ml (7.90 mmol) was added to the above solution and stirred for 30 minutes, and then a solution prepared by dissolving 2.00 g (6.68 mmol) of 6,6- di(p-chlorophenyl) fulvene in 30 ml of dehydrated tetrahydrofuran was put in the dropping funnel and slowly dropwise added while cooling at -78°C. The solution was stirred for a day while allowing the solution to go back slowly to room temperature as it was. This reaction solution was extracted with diethyl ether, and the organic layer was washed with 1N hydrochloric acid, a saturated sodium hydrogencarbonate aqueous solution and a saturated saline solution. The organic layer separated was dried on anhydrous magnesium sulfate, and then magnesium sulfate was removed by filtration. The solvent contained in the filtrate was removed by distillation under reduced pressure by means of a rotary evaporator. The residue was refined by a silica gel column and then recrystallized from toluene to obtain a targeted product (amount obtained: 0.714 g, yield: 17 %). The targeted product was identified by $^1$H-NMR and FD-MS spectra.
$^1$H NMR spectrum (270 MHz, $CDCl_3$, TMS): δ 0.94 (s, 6H), 1.14 (s, 6H), 1.27 (s, 12H), 1.62 (s, 8H), 3.06 (b, 2H), 5.30 (s, 1H), 6.38 to 6.50 (b, 3H), 7.00 to 7.29 (m, 8H)
FD-MS spectrum: m/z 684 ($M^+$).

(iv) Synthesis of di(p-chlorophenyl)methylene-(cyclopentadienyl)(octamethyloctahydrodibenzofluorenyl)-zirconium dichloride

Di(p-chlorophenyl)cyclopentadienyl-(octamethyloctahydrodibenzofluorenyl)methane 428 mg (0.62 mmol) was added to 15 ml of dehydrated diethyl ether under nitrogen atmosphere, and 0.87 ml (1.37 mmol) of a hexane solution of n-butyllithium of 1.58 mol/L was slowly dropwise added thereto and stirred overnight while cooling the above solution at 0°C. Then, 224 mg (0.59 mmol) of a zirconium tetrachloride · tetrahydrofuran complex (1 : 2) was added thereto and stirred overnight while cooling the solution at - 78°C. After a volatile matter contained in this slurry was removed by distillation under reduced pressure, the residue was washed with 40 ml of dehydrated hexane, and the washing liquid was separated by filtration. A hexane-dissolved part of the filtrate was concentrated, and dehydrated hexane was added to a solid matter precipitated to recrystallize it, whereby a targeted product was obtained (amount obtained: 90 mg, yield: 18 %). The targeted product was identified by $^1$H-NMR and FD-MS spectra.
$^1$H NMR (spectrum 270 MHz, $CDCl_3$): δ 0.87 (s, 6H), 0.99 (s, 6H), 1.42 (s, 6H), 1.49 (s, 6H), 1.64 to 1.71 (m, 8H), 5.51 to 5.53 (m, 2H), 6.17(s, 2H), 6.29 to 6.31 (m, 2H), 7.33 (dd, 2H, J = 2.16 Hz, 8.37 Hz), 7.46 (dd, 2H, J = 1.89 Hz, 8.64 Hz), 7.74 (dd, 2H, J = 2.43 Hz, 8.1 Hz), 7.88 (dd, 2H, J = 2.16 Hz, 8.37 Hz), 8.08 (s, 2H)
FD-MS spectrum: m/z 844 ($M^+$).

<Synthetic Example 4>

Synthesis of diphenylmethylene(3-tert-butyl-5-ethylcyclopentadienyl)(2,7-di-tert-butylfluorenyl)zirconium dichloride

(i) Synthesis of 1-ethyl-3-tert-butylcyclopentadiene

A three-necked flask of 300 ml equipped with a magnetic stirring bar and a three-way cock was charged with 200 ml of diethyl ether and 52 ml (154 mmol) of a diethyl ether solution of 3.0 M ethylmagnesium bromide under nitrogen atmosphere. 3-Tert-butylcyclopentenone 17.8 g (129 mmol) was dropwise added thereto in one hour under cooling on an ice-cold water bath. After stirring at room temperature for 20 hours, the reaction solution was poured into 100 ml of 2N hydrochloric acid. The organic layer was separated, and the aqueous layer was extracted twice with 50 ml of ether. An organic layer obtained was put together with the above organic layer and washed twice with a saturated sodium hydrogencarbonate aqueous solution, twice with water and twice with a saturated saline solution. It was dried on magnesium sulfate, and the solvent was removed by distillation. Then, the residue was refined by column chromatography to obtain 20.2 g (GC purity: 75 %) of a pale yellow transparent liquid. The yield was 78 %. It was identified by a $^1$H-NMR spectrum. The measurement results are shown below.

$^1$H-NMR spectrum (270 MHz, $CDCl_3$, TMS standard): δ/ppm 6.19 + 6.05 + 5.81 + 5.77 (m + m + m + m, 2H), 2.91 + 2.85 (m + m, 2H), 2.48 to 2.27 (m, 2H), 1.15 to 1.08 (s + s + m, 12H)

(ii) Synthesis of 3-tert-butyl-1-ethyl-6,6-diphenylfulvene

A three-necked flask of 300 ml equipped with a magnetic stirring rod and a three-way cock was charged with 5.11 g (23.9 mmol) of 1-ethyl-3-tert-butyl-cyclopentadiene (GC purity: 75 %) and 150 ml of THF under nitrogen atmosphere. A 1.56M n-butyllithium hexane solution 16 ml (25.2 mmol) was slowly dropwise added thereto under cooling on a dry ice/methanol bath, and then the solution was stirred at room temperature for 20 hours. 1,3-Dimethyl-2-imidazolidinone 3.1 ml (28.8 mmol) was added to a reaction solution obtained, and subsequently 5.3 g (28.8 mmol) of benzophenone was added thereto and stirred for 48 hours under refluxing. The reaction solution was poured into 100 ml of 2N hydrochloric acid. The organic layer was separated, and the aqueous layer was extracted twice with 50 ml of hexane. The extract was put together with the previous organic layer and washed with a saturated sodium hydrogencarbonate aqueous solution, water and a saturated saline solution. It was dried on magnesium sulfate, and then the solvent was removed by distillation. Thereafter, the residue was refined by column chromatography to obtain 4.2 g of an orange solid matter. The yield was 56 %. It was identified by a $^1$H-NMR spectrum. The measurement results are shown below.
$^1$H-NMR spectrum (270 MHz, $CDCl_3$, TMS standard): δ/ppm 7.2 to 7.4 (m, 10H), 6.3 (m, 1H), 5.7 (m, 1H), 1.70 + 1.85 (q, 2H), 1.15 (s, 9H), 0.85 (t, 3H).

(iii) Synthesis of diphenylmethylene(3-tert-butyl-5-ethylcyclopentadienyl)(2,7-di-tert-butylfluorenyl)

A three-necked flask of 200 ml equipped with a magnetic stirring bar and a three-way cock was sufficiently substituted with nitrogen and charged with 3.8 g (13.7 mmol) of 2,7-di-tert-butylfluorene which was dissolved in 80 ml of dehydrated diethyl ether under nitrogen atmosphere. An n-butyllithium hexane solution 9.2 ml (1.56M: 14.3 mmol) was slowly dropwise added to the above solution under cooling on an ice-cold water bath, and then the solution was stirred at room temperature for 100 hours. 3-Tert-butyl-1-ethyl-6,6-diphenylfluvene 4.5g (14.3 mmol) was added to the above reaction solution and stirred for 30 hours under refluxing. The reaction solution was poured into 100 ml of 2N hydrochloric acid in an ice bath, and then diethyl ether was added thereto to separate an organic layer. The aqueous layer was extracted twice with 50 ml of diethyl ether, and the extract was put together with the previous organic layer and washed with a saturated sodium hydrogencarbonate aqueous solution, water and a saturated sodium chloride aqueous solution. It was dried on magnesium sulfate, and then the solvent was removed by distillation. Thereafter, the residue was refined by column chromatography to obtain 4.2 g of a white solid matter. The yield was 53 %. It was identified by a FD-mass spectrometry (FD-MS). The measurement results are shown below.

FD-MS: m/z = 592 ($M^+$)

(iv) Synthesis of diphenylmethylene(3-tert-butyl-5-ethylcyclopentadienyl)(2,7-di-tert-butylfluorenyl)zirconium dichloride

A Schlenk flask of 100 mL equipped with a magnetic stirring bar and a three-way cock was sufficiently substituted with nitrogen and charged with 1.0 g (1.68 mmol) of diphenylmethylene(3-tert-butyl-5-ethylcyclopentadienyl)(2,7-di-tert-butylfluorenyl) which was dissolved in 40 ml of dehydrated diethyl ether under nitrogen atmosphere. 2.2 ml (3.4 mmol) of an n-butyllithium hexane solution of 1.56 M was slowly dropwise added thereto in an ice bath, and then the solution was stirred at room temperature for 28 hours. This reaction solution was sufficiently cooled down in a dry ice/methanol bath, and then 0.39 g (1.68 mmol) of zirconium tetrachloride was added thereto. The solution was stirred for 48 hours while allowing it to go back gradually to room temperature, and then the solvent was removed by distillation under reduced pressure. The solution was turned into a slurry by adding hexane, and it was filtrated through a glass filter filled with diatomaceous earth. A brown solid matter remaining on the filter was extracted with a small amount of dichloromethane and separated by filtration. The solvents were removed from the hexane solution and the dichloromethane solution each obtained above by distillation under reduced pressure. The dark orange solid matters each were washed with small amounts of pentane and diethyl ether and dried under reduced pressure to thereby obtain 140 mg (0.186 mmol) of a targeted compound in the form of an orange solid matter. It was identified by a $^1$H-NMR spectrum and a FD-mass spectrometry. The measurement results are shown below.

<Polymerization Example A-1>

Synthesis of syndiotactic propylene polymer (A-1):

A reaction bath having a content volume of 3 $m^3$ which was sufficiently substituted with nitrogen was charged with 1000 liter of n-heptane, and 610 ml (0.93 mol) of a toluene solution (Al = 1.53 mole/l) of methylaluminoxane was dropwise added thereto at ambient temperature. On the other hand, a magnetic stirring bar was put in a side-arm flask having a content volume of 3 liter which was sufficiently substituted with nitrogen, and it was charged with 610 ml (0.93 mol) of a toluene solution (Al = 1.53 mole/l) of methylaluminoxane and then a toluene solution of dibenzylmethylene-(cyclopentadienyl)(3,6-di-tert-butylfluorenyl)zirconium dichloride 1.30 g (1.86 mmol), followed by stirring the solution for 20 minutes. This solution was added to the reaction bath, and then 3200 NL of hydrogen was supplied at 19 $Nm^3$/hour in 10 minutes. Thereafter, polymerization was started while supplying propylene at 65 kg/hour and supplying hydrogen so that a gas phase concentration thereof in the reaction bath was 53 mol %. Propylene was continuously supplied in an amount of 65 kg/hour while maintaining a gas phase concentration of hydrogen at 53 mol % to carry out the polymerization for 4 hours at 25°C, and then a small amount of diethylene glycol monoisopropyl ether was added to terminate the polymerization. A polymer thus obtained was washed with 1.8 $m^3$ of heptane and dried at 80°C under reduced pressure for 15 hours to result in obtaining 100 kg of the polymer. The polymerization activity was 13.4 kg·PP/mmol·Zr· hr, and the polymer thus obtained had [ $\eta$ ] of 1.90 dl/g, $Tm_1$ of 152°C, $Tm_2$ of 159°C and an rrrr ratio of 94 %. The physical properties are shown in Table 1.

<Polymerization Example A-2>

Syndiotactic polypropylene (trade name: Finaplas 1471, MFR = 5.0 g/10 minutes) manufactured by Total Co., Ltd. was used as a syndiotactic propylene polymer (A-2). The physical properties thereof are shown in Table 1.

<Polymerization Example AA-1>

Synthesis of syndiotactic propylene polymer (AA-1):

A glass-made autoclave having a content volume of 500 ml which was sufficiently substituted with nitrogen was charged with 250 ml of toluene, and propylene was allowed to flow in an amount of 150 liter/hour and held at 25°C for 20 minutes. On the other hand, a magnetic stirring bar was put in a side-arm flask having a content volume of 30 ml which was sufficiently substituted with nitrogen, and it was charged with a toluene solution (Al = 1.53 mole/l) containing 5.00 mmol of methylaluminoxane and then a toluene solution containing 5.0 $\mu$ mol of dibenzylmethylene-(cyclopentadienyl)(3,6-di-tert-butylfluorenyl)zirconium dichloride, followed by stirring the solution for 20 minutes. This solution was added to toluene of the glass-made autoclave in which propylene was allowed to flow, and polymerization was started. A propylene gas was continuously supplied in an amount of 150 liter/hour to carry out the polymerization at an atmospheric pressure and 25°C for 45 minutes, and then a small amount of methanol was added to terminate the polymerization. The polymer solution was added to a largely excessive amount of methanol to precipitate a polymer, and the polymer was dried at 80°C under reduced pressure for 12 hours to result in obtaining 2.38 g of the polymer. The polymerization activity was 0.63 kg·PP/mmol·Zr· hr, and the polymer thus obtained had [ $\eta$ ] of 1.9 dl/g, Tm of 158°C ($Tm_1$ of 152°C, $Tm_2$ of 158°C), an rrrr ratio of 93.5 % and Mw/Mn of 2.0. The physical properties are shown in Table 3.

<Polymerization Example AA-2>

Synthesis of syndiotactic propylene polymer (AA-2):

A glass-made autoclave having a content volume of 500 ml which was sufficiently substituted with nitrogen was charged with 250 ml of toluene, and propylene was allowed to flow in an amount of 150 liter/hour and held at 25°C for 20 minutes. On the other hand, a magnetic stirring bar was put in a side-arm flask having a content volume of 30 ml which was sufficiently substituted with nitrogen, and it was charged with a toluene solution (Al = 1.53 mole/l) containing 5.00 mmol of methylaluminoxane and then a toluene solution containing 5.0 $\mu$ mol of dibenzylmethylene-(cyclopentadienyl)(2,7-diphenyl-3,6-di-tert-butylfluorenyl)-zirconium dichloride, followed by stirring the solution for 20 minutes. This solution was added to toluene of the glass-made autoclave in which propylene was allowed to flow, and polymerization was started. A propylene gas was continuously supplied in an amount of 150 liter/hour to carry out the polymerization at an atmospheric pressure and 25°C for 10 minutes, and then a small amount of methanol was added to terminate the polymerization. The polymer solution was added to a largely excessive amount of methanol to precipitate a polymer, and the polymer was dried at 80°C under reduced pressure for 12 hours to result in obtaining 6.95 g of the polymer. The

polymerization activity was 7.58 kg·PP/mmol·Zr· hr, and the polymer thus obtained had [ η ] of 2.9 dl/g, Tm of 162.0°C and an rrrr ratio of 95.3 %. The physical properties are shown in Table 3.

<Syndiotactic polypropylene (AA-3)>

The same polymer as the syndiotactic polypropylene polymer (A-2) was used as syndiotactic polypropylene (AA-3).
The physical properties are shown in Table 2.

<Polymerization Example AA-4>

Synthesis of syndiotactic propylene polymer (AA-4):

A syndiotactic propylene polymer (AA-4) (propylene homopolymer) having the same rrrr ratio and Mw/Mn as those of the polymer (A-1) described above and having [ η ] of 1.4 dl/g was produced according to the production process described in Polymerization Example A-1, except that hydrogen was introduced (that is, hydrogen was further supplied to the polymerization system). The physical properties of the polymer (AA-4) are shown in Table 3.

<Polymerization Example AA-5>

Synthesis of syndiotactic propylene polymer (AA-5):

A syndiotactic propylene polymer (AA-5) (propylene homopolymer) having the same rrrr ratio and Mw/Mn as those of the polymer (A-1) described above and having [ η ] of 1.2 dl/g was produced according to the production process described in Polymerization Example A-1, except that hydrogen was introduced (that is, hydrogen was further supplied to the polymerization system). The physical properties of the polymer (AA-5) are shown in Table 3.

<Syndiotactic polypropylene (AA-6)>

Syndiotactic polypropylene (trade name: Finaplas 1571, MFR = 9.1 g/10 minutes) manufactured by Total Co., Ltd. was used as a syndiotactic polypropylene polymer (AA-6). The physical properties thereof are shown in Table 3.

<Polymerization Example B-1>

Synthesis of propylene· α-olefin copolymer (B-1):

A polymerization equipment of 4000 ml which was sufficiently substituted with nitrogen was charged with 1834 ml of dry hexane and triisobutylaluminum (1.0 mmol) at normal temperature, and then an inside temperature of the polymerization equipment was elevated up to 70°C. Pressure was applied by propylene so that a pressure of the system was 0.66 MPa, and then a pressure of the system was controlled to 1.36 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization reactor to polymerize them for 15 minutes while maintaining an inner temperature at 70°C and a pressure in the system at 1.36 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 105 g was obtained and had MFR of 0.7 (g/10 minutes) and [ η ] of 2.5 (dL/g) which was measured in decalin at 135°C. Physical properties obtained by measuring the polymer obtained above are shown in Table 1. The $rr_1$ value was 78 %. The above operation was repeated to obtain a required amount of the polymer, and this was melt-kneaded and used in examples described later.

<Polymerization Example B-2>

Synthesis of propylene· α-olefin copolymer (B-2):

A polymerization reactor of 4000 ml which was sufficiently substituted with nitrogen was charged with 1834 ml of dry hexane and triisobutylaluminum (1.0 mmol) at normal temperature, and then an inside temperature of the polymerization reactor was elevated up to 70°C. Pressure was applied by propylene so that a pressure of the system was

0.67 MPa, and then a pressure of the system was controlled to 1.37 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization reactor to polymerize them for 10 minutes while maintaining an inner temperature at 70°C and a pressure in the system at 1.37 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 90 g was obtained and had MFR of 1.0 (g/10 minutes) and [ η ] of 2.3 (dL/g) which was measured in decalin at 135°C. The $rr_1$ value was 75 %. Physical properties obtained by measuring the polymer obtained above are shown in Table 1. The above operation was repeated to obtain a required amount of the polymer, and this was melt-kneaded and used in examples described later.

<Polymerization Example B-3>

Synthesis of propylene· α-olefin copolymer (B-3):

A polymerization reactor of 4000 ml which was sufficiently substituted with nitrogen was charged with 1834 ml of dry hexane, 20 g of 1-butene and triisobutylaluminum (1.0 mmol) at normal temperature, and then an inside temperature of the polymerization reactor was elevated up to 70°C. Pressure was applied by propylene so that a pressure of the system was 0.63 MPa, and then a pressure of the system was controlled to 1.33 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization equipment to polymerize them for 10 minutes while maintaining an inner temperature at 70°C and a pressure in the system at 1.30 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 107 g was obtained and had MFR of 0.8 (g/10 minutes) and [ η ] of 2.4 (dL/g) which was measured in decalin at 135°C. Physical properties obtained by measuring the polymer obtained above are shown in Table 4-1. The $rr_1$ value was 79 %. The above operation was repeated to obtain a required amount of the polymer, and this was melt-kneaded and used in examples described later.

<Polymerization Example BB-1>

Synthesized by the same process as in Polymerization Example B-1.

<Polymerization Example BB-2>

Propylene· α-olefin copolymer (BB-2):

A polymerization reactor of 4000 ml which was sufficiently substituted with nitrogen was charged with 1834 ml of dry hexane and triisobutylaluminum (1.0 mmol) at normal temperature, and then an inside temperature of the polymerization reactor was elevated up to 70°C. Pressure was applied by propylene so that a pressure of the system was 0.64 MPa, and then a pressure of the system was controlled to 1.34 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization reactor to polymerize them for 15 minutes while maintaining an inner temperature at 70°C and a pressure in the system at 1.34 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 109 g was obtained and had [ η ] of 2.6 (dL/g) which was measured in decalin at 135°C and MFR of 0.6 (g/10 minutes). Physical properties obtained by measuring the polymer obtained above are shown in Table 1. The $rr_1$ value was 76 %. The above operation was repeated to obtain a required amount of the polymer, and this was melt-kneaded and used in the examples. In evaluating a forming property of the film, used was a polymer which was produced by scaling up according to the production conditions described above and which had the same ethylene content, rr ratio, [ η ] and Mw/Mn as those of the polymer described above.

<Polymerization Example BB-3>

Synthesized by the same process as in Polymerization Example B-2.

<Polymerization Example BB-4>

Synthesis of propylene· α-olefin copolymer (BB-4):

A polymerization reactor of 4000 ml which was sufficiently substituted with nitrogen was charged with 1834 ml of dry hexane, 20 g of 1-butene and triisobutylaluminum (1.0 mmol) at normal temperature, and then an inside temperature of the polymerization reactor was elevated up to 70°C. Pressure was applied by propylene so that a pressure of the system was 0.63 MPa, and then a pressure of the system was controlled to 1.33 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization reactor to polymerize them for 10 minutes while maintaining an inner temperature at 70°C and a pressure in the system at 1.33 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 102 g was obtained and had [ η ] of 2.3 (dL/g) which was measured in decalin at 135°C and MFR of 1.0 (g/10 minutes). Physical properties obtained by measuring the polymer obtained above are shown in Table 1. The rr1 value was 75 %. The physical properties are shown in Table 3.

<Polymerization Example BB-5>

Synthesis of propylene· α-olefin copolymer (BB-5):

A polymerization reactor of 4000 ml which was sufficiently substituted with nitrogen was charged with 1834 ml of dry hexane and triisobutylaluminum (1.0 mmol) at normal temperature, and then an inside temperature of the polymerization reactor was elevated up to 50°C. Pressure was applied by propylene so that a pressure of the system was 0.67 MPa, and then a pressure of the system was controlled to 1.37 MPa by ethylene. Next, a toluene solution of di(p-chlorophenyl)methylene(cyclopentadienyl)-(octamethyloctahydrodibenzofluorenyl)zirconium dichloride 0.001 mmol brought into contact with methylaluminoxane (manufactured by Tosoh Finechem Corporation) of 0.3 mmol in terms of aluminum was added to the polymerization reactor to polymerize them for 10 minutes while maintaining an inner temperature at 50°C and a pressure in the system at 1.37 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The polymer 78 g was obtained and had [ η ] of 3.5 (dL/g) which was measured in decalin at 135°C and an ethylene content of 18 mol % which was measured by $^{13}$C-NMR. Physical properties obtained by measuring the polymer obtained above are shown in Table 4.

<Propylene polymers (D-1) to (D-8)>

Propylene polymer (D-1): PP (trade name: F102W, MFR = 2.1 g/10 minutes) manufactured by Prime Polymer Co., Ltd. Propylene polymer (D-2): PP (trade name: J104W, MFR = 5.2 g/10 minutes) manufactured by Prime Polymer Co., Ltd.
Propylene polymer (D-3): PP (trade name: B101, MFR = 0.7 g/10 minutes) manufactured by Prime Polymer Co., Ltd.
Propylene polymer (D-4): PP (trade name: J106G, MFR = 15.0 g/10 minutes) manufactured by Prime Polymer Co., Ltd.
Propylene polymer (D-5): PP (trade name: J107G, MFR = 30.0 g/10 minutes) manufactured by Prime Polymer Co., Ltd.
Propylene polymer (D-6): PP (trade name: J108M, MFR = 45.0 g/10 minutes) manufactured by Prime Polymer Co., Ltd.
Propylene polymer (D-7):

Synthesis of propylene·ethylene·butene copolymer:

A polymerization reactor of 4000 ml which was sufficiently substituted with nitrogen was charged with 1834 ml of dry hexane, 110 g of 1-butene and triisobutylaluminum (1.0 mmol) at normal temperature, and then an inside temperature of the polymerization reactor was elevated up to 55°C. Pressure was applied by propylene so that a pressure of the system was 0.58 MPa, and then a pressure of the system was controlled to 0.75 MPa by ethylene. Next, a toluene solution of diphenylmethylene(3-tert-butyl-5-ethylcyclopentadienyl)-(2,7-di-tert-butylfluorenyl)zirconium dichloride 0.001 mmol synthesized in Synthesis Example 2 brought into contact with methylaluminoxane (manufactured by Tosoh Finechem Corporation) of 0.3 mmol in terms of aluminum was added to the polymerization reactor to polymerize them for 25 minutes while maintaining an inner temperature at 55°C and a pressure in the system at 0.75 MPa by ethylene, and 20 ml of methanol was added to terminate the polymerization. After releasing the pressure, the polymerization solution was poured into 4 L of methanol to precipitate the polymer, which was dried at 130°C for 12 hours under vacuum. The

polymer 120.2 g was obtained and had MFR of 0.7 (g/10 minutes). Physical properties obtained by measuring the polymer obtained above are shown in Table 4.

Propylene polymer (D-8):

A polymer (D-8) having the same ethylene content and butene content as those of the polymer (D-7) described above and having [η] of 4.0 dl/g and Mw/Mn of 2.1 was produced according to the production conditions of the polymer (D-7) described above, except that the polymerization temperature was changed to 40°C. The properties of the polymer obtained are shown in Table 4.

Shown in Fig. 1 is a diagram obtained by plotting MFR and [η] of the isotactic propylene-based polymers (D-1) to (D-8), (BB-1) to (BB-5), (AA-1), (AA-3), (AA-4), (AA-5) and (AA-6). It can be found that the isotactic propylene-based polymers (D-1) to (D-8) are distinguished from the polymer (B) used in the preferred embodiment of the present invention by the equation (b-2).

Example 1

Blended were 71 parts by weight of the syndiotactic propylene polymer (A-1) obtained in Polymerization Example A-1, 29 parts by weight of the propylene·ethylene copolymer (B-2) obtained in Polymerization Example B-2, 43 parts by weight of the ethylene· α-olefin copolymer (C), 0.1 part by weight of tri(2,4-di-tert-butylphenyl) phosphate as a secondary antioxidant against the above composition and 0.1 part by weight of n-octadecyl-3-(4'-hydroxy-3',5'-di-tert-butylphenyl) propionate as a heat resistant stabilizer. The blended matter was granulated on the conditions of a preset temperature of 230°C, a resin extruder output of 40 g/minute and 200 rpm by means of a twin-screw extruder manufactured by Bravo Co., Ltd. to obtain pellets for measurement.

Further, the pellets obtained above were used to form a film having a thickness of 250 μm by extrusion on the conditions of an extruder preset temperature of 210°C, a roll temperature of 40°C and a winding rate of 0.5 m/minute by means of a single-screw extruder having a 20 mm ϕ ·L/D of 28 with which a T-die having a diameter of 25 mm ϕ and a lip width of 250 mm × 0.8 mm was equipped, manufactured by Thermo Co., Ltd. The results thereof are shown in Table 2.

Example 2

Blended were 40 parts by weight of the syndiotactic propylene polymer (A-1) obtained in Polymerization Example A-1, 60 parts by weight of the propylene · ethylene copolymer (B-3) obtained in Polymerization Example B-3 and the same amounts of the secondary antioxidant against the above composition and the heat resistant stabilizer as is the case with Example 1. Pellets and a film were produced on the same extruding conditions and forming conditions as in Example 1 by means of the twin-screw extruder manufactured by Bravo Co., Ltd. The results thereof are shown in Table 2.

Example 3

Blended were 67 parts by weight of the syndiotactic propylene polymer (A-1) obtained in Polymerization Example A-1, 33 parts by weight of the propylene·ethylene copolymer (B-1) obtained in Polymerization Example B-1, 67 parts by weight of the ethylene·α-olefin copolymer (C) and the same amounts of the secondary antioxidant against the above composition and the heat resistant stabilizer as is the case with Example 1. Pellets and a film were produced on the same extruding conditions and forming conditions as in Example 1 by means of the twin-screw extruder manufactured by Bravo Co., Ltd. The results thereof are shown in Table 2.

Example 4

Blended were 50 parts by weight of the syndiotactic propylene polymer (A-1) obtained in Polymerization Example A-1, 50 parts by weight of the propylene·ethylene copolymer (B-2) obtained in Polymerization Example B-2, 67 parts by weight of the ethylene· α-olefin copolymer (C) and the same amounts of the secondary antioxidant against the above composition and the heat resistant stabilizer as is the case with Example 1. Pellets and a film were produced on the same extruding conditions and forming conditions as in Example 1 by means of the twin-screw extruder manufactured by Bravo Co., Ltd. The results thereof are shown in Table 2.

Comparative Example 1

Blended were 71 parts by weight of syndiotactic polypropylene (A-2) (trade name: Finaplas 1471, MFR = 5.0 g/10 minutes) manufactured by Total Co., Ltd., 29 parts by weight of the propylene· ethylene copolymer (B-2) obtained

in Polymerization Example B-2, 43 parts by weight of the ethylene· α-olefin copolymer (C) and the same amounts of the secondary antioxidant against the above composition and the heat resistant stabilizer as is the case with Example 1. Pellets and a film were produced on the same extruding conditions and forming conditions as in Example 1 by means of the twin-screw extruder manufactured by Bravo Co., Ltd. The results thereof are shown in Table 2.

Table 1

| | | Syndiotactic propylene polymer (A) | | Propylene· α-olefin copolymer (B) | | |
|---|---|---|---|---|---|---|
| | | (A-1) | (A-2) | (B-1) | (B-2) | (B-3) |
| Composition | | | | | | |
| (a) Propylene content | (mol %) | 100 | 100 | 77 | 82 | 90 |
| (b) Ethylene content | (mol %) | 0 | 0 | 23 | 18 | 10 |
| (c) α-Olefin content | (mol %) | 0 | 0 | 0 | 0 | 0 |
| Melting point (Tm) | (°C) | 152/ 159 | 113/ 125 | - | - | - |
| r.r.r.r. | (%) | 94 | 69 | - | - | - |
| r.r. | (%) | - | - | 78 | 75 | 79 |
| MFR | (g/10 min) | 2.4 | 5.0 | 0.7 | 1.0 | 0.8 |
| [ η ] | (dl/g) | 1.9 | 1.6 | 2.5 | 2.3 | 2.4 |
| Density | ($g/cm^3$) | 0.882 | 0.877 | 0.852 | 0.852 | 0.860 |
| ΔH | (mJ/mg) | 62 | 33 | - | - | - |
| Mw/Mn | | 2.0 | 2.0 | 2.0 | 2.0 | 2.0 |
| $t_{1/2}$ (110°C) | (second) | 138 | 22730 | | | |
| Amount of decane-soluble part | (%) | <0.5 | 25 | | | |

Table 2

| | | Example | | | | Comparative Example |
|---|---|---|---|---|---|---|
| | | 1 | 2 | 3 | 4 | 1 |
| Propylene polymer (A) | | A-1 | A-1 | A-1 | A-1 | A-2 |
| Propylene·α-olefin copolymer (B) | | B-2 | B-3 | B-1 | B-2 | B-2 |
| Ethylene·α-olefin copolymer (C) | | C | - | C | C | C |
| (A)/(B)/(C) composition ratio (part by weight) | | 71/29/4 3 | 40/60/0 | 67/33/6 7 | 50/50/6 7 | 71/29/43 |
| Tm | (%) | 155 | 154 | 156 | 155 | 125 |
| Tensile elastic modulus | (MPa | 214 | 92 | 187 | 91 | 120 |
| Tensile impact strength | ($kJ/m^2$) | 181 | 146 | 527 | 334 | 70 |
| Light transmittance | (%) | 90 | 94 | 88 | 90 | 88 |
| Light transmittance after heat treatment | (%) | 90 | 90 | 91 | 89 | 72 |
| Reduction rate | (%) | 0 | 4 | 3 | 1 | 18 |

(continued)

| | | Example | | | | Comparative Example |
|---|---|---|---|---|---|---|
| | | 1 | 2 | 3 | 4 | 1 |
| Amount of room temperature decane-soluble part | (wt %) | 49 | 60 | 58 | 78 | 59 |
| [ η ] of decane-soluble part | | 2.1 | 2.4 | 2.1 | 2.1 | 2.0 |
| Composition | | | | | | |
| (a) Propylene content | (mol %) | 67.5 | 94.0 | 49.1 | 48.6 | 67.5 |
| (b) Ethylene content | (mol %) | 26.1 | 6.0 | 45.3 | 45.8 | 26.1 |
| (c) α-Olefin content | (mol %) | 6.4 | 0.0 | 5.6 | 5.6 | 6.4 |

Table 3

| | | Syndiotactic polypropylene polymer (AA) | | | | | | Propylene·α-olefin copolymer (BB) | | | | |
|---|---|---|---|---|---|---|---|---|---|---|---|---|
| | | (AA-1) | (AA-2) | (AA-3) | (AA-4) | (AA-5) | (AA-6) | (BB-1) | (BB-2) | (BB-3) | (BB-4) | (BB-5) |
| r.r. | (%) | - | - | - | - | - | - | 82.9 | 84.6 | 83.5 | 82.1 | 75 |
| MFR | (g/10 min) | 2.4 | | 5.0 | 16.8 | 20.3 | 9.1 | 0.7 | 0.6 | 1.0 | 1.0 | 0.1 |
| [ η ] | (dl/g) | 1.9 | 2.9 | 1.8 | 1.4 | 1.2 | 1.3 | 2.5 | 2.6 | 2.3 | 2.3 | 3.5 |

Table 4

| | | Propylene polymer (D) | | | | | | | |
|---|---|---|---|---|---|---|---|---|---|
| | | (D-1) | (D-2) | (D-3) | (D-4) | (D-5) | (D-6) | (D-7) | (D-8) |
| MFR | (g/10 min) | 2.1 | 5.2 | 0.7 | 15.0 | 30.0 | 45.0 | 0.7 | 0.2 |
| [ η ] | (dl/g) | 2.7 | 2.4 | 3.2 | 1.9 | 1.7 | 1.4 | 2.9 | 4.0 |
| mmmm | (%) | - | - | - | 96 | - | 96 | - | - |

INDUSTRIAL APPLICABILITY

A polypropylene-based resin film in which transparency of the film is not reduced even by sterilization treatment at high temperature and which is excellent in low-temperature impact resistance and flexibility is useful as a container for foods and a medical container.

## Claims

**1.** A polypropylene-based resin film satisfying the following requisites (1) to (3) at the same time and having a thickness of 10 to 500 μm;

(1) a Young's modulus measured according to JIS K6781 is 10 to 500 MPa,
(2) a tensile impact strength measured at 0°C is 50 to 1000 kJ/cm$^2$ and
(3) a light transmittance is 85 to 99 %, and a reduction rate of the light transmittance before and after hot water treatment at 120°C for 30 minutes falls in a range of 0 to 15 %.

**2.** The polypropylene-based resin film as described in claim 1, further satisfying the following requisite (4):

(4) a melting point (Tm) measured by a differential scanning calorimeter (DSC) is 145°C or higher.

**3.** The polypropylene-based resin film as described in claim 1 or 2, comprising a propylene-based polymer composition comprising:

(A) 85 to 25 parts by weight of a syndiotactic polypropylene polymer satisfying the following requisite (a) and
(B) 15 to 75 parts by weight (provided that the total of (A) and (B) is 100 parts by weight) of a propylene · α-olefin copolymer satisfying the following requisite (b);
(a): a syndiotactic pentad ratio (rrrr ratio) measured by $^{13}C$-NMR is 85 % or more; a melting point (Tm) measured by a differential scanning calorimeter (DSC) is 145°C or higher; and a propylene unit is contained in an amount of exceeding 90 mole % (provided that the total of a constitutional unit originating in propylene and a constitutional unit originating in α-olefin having 2 to 20 carbon atoms (excluding propylene) which may be optionally contained is 100 mole %);
(b): a propylene unit is contained in an amount of 55 to 90 mole % (provided that the whole amount of constitutional units contained in the above polymer (B) is 100 mole %); at least one α-olefin unit selected from α-olefins having 2 to 20 carbon atoms (excluding propylene) is contained in an amount of 10 to 45 mole % (provided that the total of the propylene unit and the α-olefin unit having 2 to 20 carbon atoms (excluding propylene) is 100 mole %); MFR measured at 230°C and a load of 2.16 kg according to JIS K-6721 falls in a range of 0.01 to 100 g/10 minutes; and at least one of the following requisites (b-1) and (b-2) is satisfied:

(b-1): a syndiotactic triad ratio (rr ratio) measured by a $^{13}C$-NMR method is 60 % or more; and
(b-2): an intrinsic viscosity [ η ] (dL/g) measured at 135°C in decalin and MFR (g/10 minutes, 230°C and a load of 2.16 kg) described above satisfy the following relational equation:

$$1.50 \times MFR^{(-0.20)} \leqq [\eta] \leqq 2.65 \times MFR^{(-0.20)}$$

**4.** The polypropylene-based resin film as described in claim 3, further comprising an ethylene · α-olefin copolymer satisfying the following requisite (c) in an amount of 1 to 100 parts by weight based on 100 parts by weight of the total of (A) and (B); (c): 50 to 99 mole % of an ethylene unit and 1 to 50 mole % (provided that the whole amount of constitutional units contained in the above polymer (C) is 100 mole %) of an α-olefin unit having 3 to 20 carbon atoms are contained.

**5.** The polypropylene-based resin film as described in claim 1 or 2, wherein a propylene unit concentration ($S_P$) is 40 to 95 mole %; an ethylene unit concentration ($S_E$) is 60 to 5 mole %; and a concentration ($S_\alpha$) of an α-olefin unit having 4 to 10 carbon atoms is 0 to 15 mole % (provided that $S_P + S_E + S_\alpha$ = 100 mole % and $S_P/S_E>1$).

**6.** The polypropylene-based resin film as described in any of claims 1 to 5, wherein a component ($D_{sol}$) soluble in decane at room temperature has an intrinsic viscosity of 1.5 to 4.0 (dl/g).

**7.** The polypropylene-based resin film as described in any of claims 1 to 5, wherein it is formed by an inflation or extrusion method.

**8.** A multilayer film prepared by using the polypropylene-based resin film as described in any of claims 1 to 3 and claims 5 to 7 as a base material layer and laminating an outer layer comprising a polyolefin-based resin on at least one surface of the base material layer.

**9.** A container for foods comprising the polypropylene-based resin film as described in any of claims 1 to 7.

**10.** A container for foods comprising the multilayer film as described in claim 8.

**11.** A medical container comprising the polypropylene-based resin film as described in any of claims 1 to 7.

**12.** A medical container comprising the multilayer film as described in claim 8.

[Fig. 1]

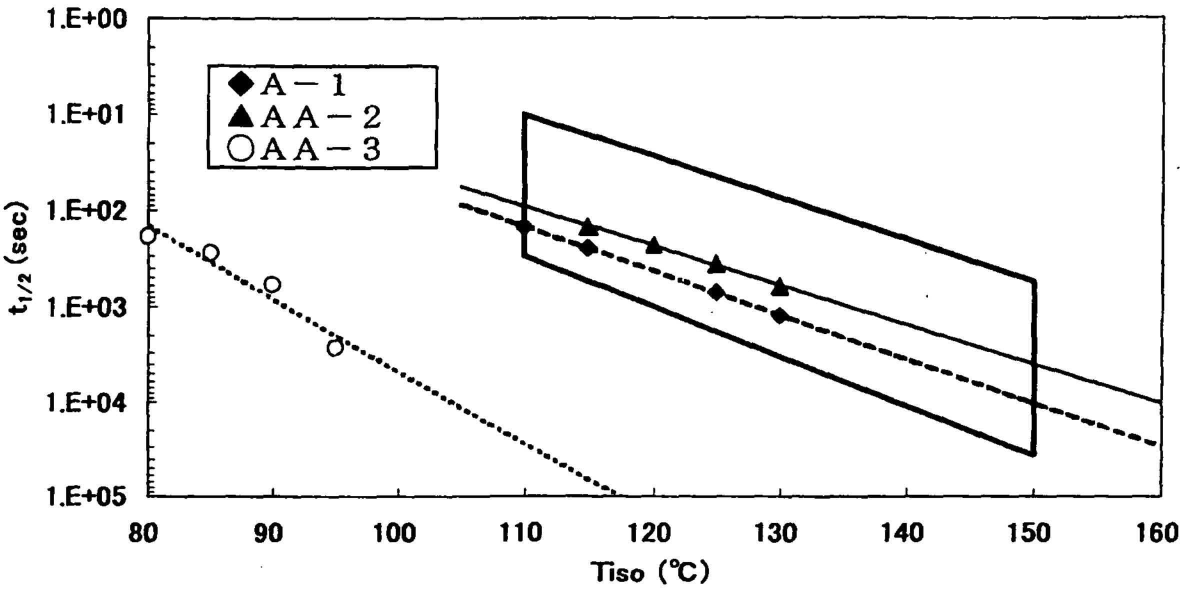

1.E+00
1.E+01
1.E+02
1.E+03
1.E+04
1.E+05
t1/2 (sec)
◆A－1
▲AA－2
○AA－3
80
90
100
110
120
130
140
150
160
Tiso (℃)


[Fig. 2]

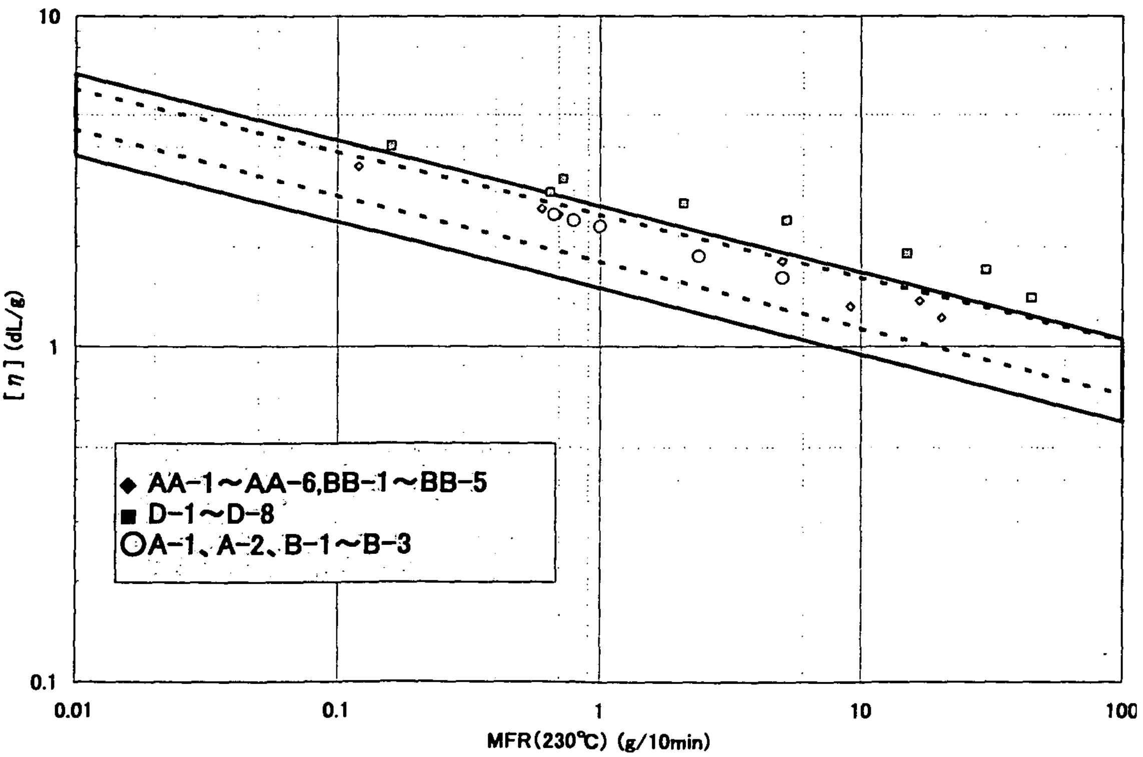

10
1
0.1
[η] (dL/g)
◆ AA-1～AA-6,BB-1～BB-5
■ D-1～D-8
○A-1、A-2、B-1～B-3
0.01
0.1
1
10
100
MFR(230℃) (g/10min)

**INTERNATIONAL SEARCH REPORT**

International application No.
PCT/JP2007/072123

A. CLASSIFICATION OF SUBJECT MATTER
*C08J5/18*(2006.01)i, *A61J1/10*(2006.01)i, *B32B27/32*(2006.01)i, *B65D65/40*(2006.01)i, *C08F10/06*(2006.01)i, *C08L23/10*(2006.01)i

According to International Patent Classification (IPC) or to both national classification and IPC

B. FIELDS SEARCHED

Minimum documentation searched (classification system followed by classification symbols)
C08J5/18, A61J1/10, B32B27/32, B65D65/40, C08F10/06, C08L23/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-56128 A (Mitsui Chemicals, Inc.),<br>02 March, 2006 (02.03.06),<br>Claims; Par. Nos. [0020] to [0042], [0050] to [0057]; examples<br>(Family: none) | 1-8<br>1-12 |
| Y | WO 2004/067627 A1 (Mitsui Chemicals, Inc.),<br>12 August, 2004 (12.08.04),<br>Claims; page 19, line 1 to page 20, line 26<br>& AU 2004207080 A1 & AU 2004207080 B2<br>& CA 2514426 A1 & CN 1742049 A<br>& CN 1931389 A & EP 1593710 A1<br>& EP 1632528 A2 & JP 2004-285318 A<br>& JP 2007-130491 A & KR 20050092784 A<br>& KR 20060103286 A & KR 20070072586 A<br>& US 2006/0057321 A1 | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 December, 2007 (11.12.07) | 25 December, 2007 (25.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/072123

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-147135 A (Mitsui Chemicals, Inc.), 21 May, 2003 (21.05.03), Claims; Par. Nos. [0124] to [0130] (Family: none) | 1-12 |
| Y | JP 3-81128 A (Mitsui Toatsu Chemicals, Inc.), 05 April, 1991 (05.04.91), Examples & AU 5389990 A & AU 607366 B2 & BR 90001985 A & CA 2015650 A1 & CA 2015650 C & CN 1046909 A & DE 69008017 T2 & DE 69023575 T2 & EP 395055 A1 & EP 395055 B1 & EP 414202 A2 & EP 414202 B1 & JP 2818212 B2 & JP 3-81130 A & JP 2825544 B2 & JP 3-200813 A & JP 2891489 B2 & KR 930006249 B1 & NO 901914 A & PT 93853 A & US 6255425 B1 | 1-12 |
| Y | JP 4-332740 A (Mitsui Toatsu Chemicals, Inc.), 19 November, 1992 (19.11.92), Examples & JP 3135276 B2 | 1-12 |
| Y | JP 5-17589 A (Mitsui Toatsu Chemicals, Inc.), 26 January, 1993 (26.01.93), Examples & JP 3251607 B2 | 1-12 |
| Y | JP 5-162158 A (Mitsui Toatsu Chemicals, Inc.), 29 June, 1993 (29.06.93), Examples (Family: none) | 1-12 |
| Y | JP 6-75101 A (Mitsui Toatsu Chemicals, Inc.), 18 March, 1994 (18.03.94), Examples (Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9216640 A
- JP 2005053131 A
- JP 2004244044 A
- WO 200127124 A
- WO 2004087775 A
- JP 2078687 A
- JP 2167305 A
- JP 2024701 A
- JP 3103407 A
- US 4960878 A
- US 5041584 A
- JP 1501950 A
- JP 1502036 A
- JP 3179005 A
- JP 3179006 A
- JP 3207703 A
- JP 3207704 A
- US P5321106 A
- JP 2004051676 A
- JP 2002097325 A
- WO 04029062 A
- JP 2004189666 A


### Non-patent literature cited in the description


- *Macromolecules,* 1998, vol. 31, 1335-1340